# EUROPEAN PATENT SPECIFICATION

(11) **EP 0 664 721 B1**
(45) Date of publication and mention of the grant of the patent: **15.01.1997**
(21) Application number: 93924917.3
(22) Date of filing: 12.10.1993
(51) Int. Cl.: B01D 3/00

(54) **METHOD AND APPARATUS FOR CONCURRENT REACTION WITH DISTILLATION**
VERFAHREN UND APPARAT FÜR DIE GLEICHZEITIGE REAKTION UND DISTILLATION
PROCEDE ET APPAREIL POUR OBTENIR UNE REACTION ACCOMPAGNEE SIMULTANEMENT D'UNE DISTILLATION

(30) Priority: 16.10.1992 US 962266
(43) Date of publication of application: 02.08.1995
(73) Proprietor: KOCH ENGINEERING COMPANY INC, Wichita Kansas 67220 (US)
(72) Inventor: YEOMAN, Neil, Merrick, NY 11566 (US); PINAIRE, Ronald, Wichita, KS 67212 (US); ULOWETZ, Michael, A., Wichita, KS 67206 (US); NACE, Timothy, P., Wichita, KS 67208 (US); FURSE, David, A., Wichita, KS 67211 (US)
(74) Representative: Jackson, Peter Arthur
(86) International application number: US9309700
(87) International publication number: WO9408679

(56) References cited:
- EP-A- 0 470 655
- FR-A- 2 437 239

## Description

This invention relates in general to a reaction with distillation column in which mass transfer and chemical reaction occur within the same general region within the column, and, more particularly, to a structure within the column which allows such mass transfer and chemical reaction to occur. The invention also relates to a process employing a plurality of such structures.

Various structures have been suggested for use in processes wherein concurrent reaction with distillation of fluid streams is desired. One such type of reaction with distillation structure employs a distillation tray and a downcomer which extends between adjacent distillation trays and is packed with catalyst particles to form a catalyst bed. The distillation tray facilitates mass transfer between the liquid and vapor streams while the catalyst bed in the downcomer causes the liquid stream to undergo catalytic reaction as it descends between trays. In the design of this type of structure as illustrated in US-A-3,629,478 and US-A-3,634,535 all of the downwardly flowing liquid stream is channeled through the downcomer as it descends between adjacent trays.

Forcing all of the liquid to flow through the packed downcomer in the structure described above can be advantageous in certain applications because liquid feed is continually presented to the catalyst and the reaction product is removed from the catalyst surface at a rate fast enough to ensure that the reaction product does not inhibit the effectiveness of the catalyst. In many applications, however, it may be unnecessary to force all of the descending liquid through the packed downcomer because the desired chemical reaction can be accomplished by bringing only a portion of the liquid stream into contact with the catalyst. In such applications, the use of the packed downcomer structure as described may be undesirable because the liquid flow rate that can be achieved in the column is limited by the permeability of the catalyst bed.

Another type of conventional catalytic reaction with distillation structure employs a cloth belt which is supported by a steel wire support structure and has a plurality of pockets filled with catalyst. US-A-4,307,254 and US-A-4,302,356 provide examples of structures of this type. The hydraulic characteristics of a reaction with distillation process which employs the cloth belt can be much higher than when the previously described packed downcomer is used because all of the descending liquid stream is not forced to flow through the catalyst pockets. Instead, the liquid stream is free to flow through the open areas surrounding the cloth belt.

The catalyst in the cloth belt structure previously described is wetted by the liquid soaking through the cloth covering and diffusing through the catalyst. Because the liquid is not forced through the catalyst in the cloth belt structure, the reaction products may in some instances be removed too slowly from contact with the catalyst. The catalyst effectiveness or reactivity in the cloth belt may thus be less than desired in certain applications.

In other applications in which the cloth belt is used, the column region containing the cloth belt may be flooded with liquid to enhance the catalytic reaction of the liquid. Because of the flooded conditions in that portion of the column, mass transfer between the liquid and vapor streams is substantially impeded. Provisions must then be made for allowing distillation to occur elsewhere within the column and the vapor stream must be bypassed around the flooded region. The cloth belt in those applications thus functions primarily as a reaction structure and not a combination reaction with distillation structure.

A still further example of a conventional reaction with distillation structure employs a packing such as in the form of corrugated plates which have a catalyst bed formed between pairs of adjacent plates. Multiple pairs of plates are then arrayed in alternating directions to form liquid and vapor flow channels in the troughs of the plates. This "sandwich" type construction can provide very high mass transfer rates because it causes more uniform distribution of and contact between the liquid and vapor streams. Hydraulic performance can also be very high because the flow channels allow most of the liquid stream to bypass the catalyst. In addition to the favorable mass transfer and hydraulic characteristics, the sandwich construction provides increased catalyst effectiveness because a portion of the liquid stream is forced through the catalyst beds at a rate which facilitates removal of the reaction product from contact with the catalyst.

Although the sandwich construction can provide better processing performance than either the downcomer or cloth belt structures previously described, it can also be much more expensive than those structures and economic considerations may prevent the use of the sandwich construction in many applications. A need has thus arisen for a more economical reaction with distillation structure that provides the desired reactivity as well as mass transfer and hydraulic performance so that the structure can be used in a greater range of chemical processing applications.

It is an object of this invention to provide, in a process column, a reaction with distillation structure which forces a portion of a descending liquid stream through a catalyst bed to continually present fresh liquid feed to the catalyst for reaction and to continually remove the reaction product from contact with the catalyst so that it does not impede reaction of the liquid feed, but which structure also allows another portion of the liquid stream to bypass the catalyst bed so that the desired liquid flow rate through the column can be achieved.

It is another object of this invention to provide a process in which a reaction with distillation structure is used to effect mass transfer between liquid and vapor streams and, in addition, provide the desired reactivity and hydraulic performance by causing a portion of the descending liquid stream to be driven through a catalyst bed while allowing another portion of the liquid stream to bypass the catalyst bed as it flows between adjacent reaction with distillation structures.

It is also an object of this invention to provide a reaction with distillation structure that provides the desired mass transfer performance while forcing only a portion of a liquid stream through a catalyst bed so that the desired hydraulic performance can be achieved.

It is a further object of this invention to provide a reaction with distillation structure constructed to provide the desired reactivity, mass transfer and hydraulic performance at a cost low enough to allow the structure to be economically used in many different types of reaction with distillation processes.

It is a still further object of this invention to provide a reaction with distillation structure which allows liquid to flow substantially horizontally through a catalyst bed as it descends between adjacent structures so that reduced resistance to flow can be achieved by reducing the distance of travel of the liquid through the catalyst bed and increasing the surface area of the catalyst bed which is open to fluid flow.

It is yet another object of this invention to provide a reaction with distillation structure which divides the catalyst bed among multiple containers so that the resistance to fluid flow through the divided catalyst beds is substantially reduced, including to the extent that the catalyst beds can accommodate all of the desired volume of liquid flow through the column containing the reaction with distillation structure.

According to a first aspect of the present invention, a process for operating a column is defined by claims 1, 4, 6, 10 and 15.

According to a second aspect of the present invention, a structure for use in a column is defined by claims.

According to a third aspect of the present invention, a column is defined by claims 74 and 77.

In the accompanying drawings which form a part of the specification and are to be read in conjunction therewith and in which like reference numerals are used to indicate like parts in the various views:
Fig. 1 is a fragmentary side elevational view of a reaction with distillation column containing a first embodiment of a reaction with distillation structure in accordance with the present invention and taken in vertical section;
Fig. 2 is a top plan view of a reaction with distillation structure of the present invention and of the type shown in the column of Fig. 1, the view being taken in horizontal section along line 2-2 of Fig. 1;
Fig. 3 is a fragmentary side elevational view of a column taken in vertical section and similar to that shown in Fig. 1 but employing another embodiment of a reaction with distillation structure in accordance with the present invention;
Fig. 4 is a fragmentary side elevational view of a column taken in vertical section and showing a reaction with distillation structure similar to that shown in Fig. 3 but with the tops of the catalyst containers shown level with the associated trays and plate-type overflow weirs being provided to cause liquid to accumulate on the trays;
Fig. 5 is a fragmentary side elevational view of a column taken in vertical section and showing a double-pass version of the reaction with distillation structures shown in Fig. 3;
Fig. 6 is a fragmentary side elevational view of a column taken in vertical section and showing a further embodiment of a reaction with distillation structure of the present invention;
Fig. 7 is a fragmentary side elevation view of a column taken in vertical section and showing a reaction with distillation structure similar to that shown in Fig. 6 but with the tops of the catalysts containers shown level with the associated trays and plate-type overflow weirs being provided to cause liquid accumulation on the trays;
Fig. 8 is an enlarged fragmentary side elevational view of a reaction with distillation structure employing a cylindrical catalyst container, portions of the structure being taken in vertical section and other portions being broken away for purposes of illustration;
Fig. 9 is a fragmentary side elevational view of a column taken in vertical section and showing a combination of different reaction with distillation structures forming a double-pass version of the arrangement shown in Fig. 6;
Fig. 10 is a fragmentary side elevational view of a column taken in vertical section and showing a different arrangement of one of the types of reaction with distillation structures illustrated in Fig. 9; and
Fig. 11 is a fragmentary side elevational view of a column taken in vertical section and showing a further arrangement of the reaction with distillation structures shown in Fig. 10.

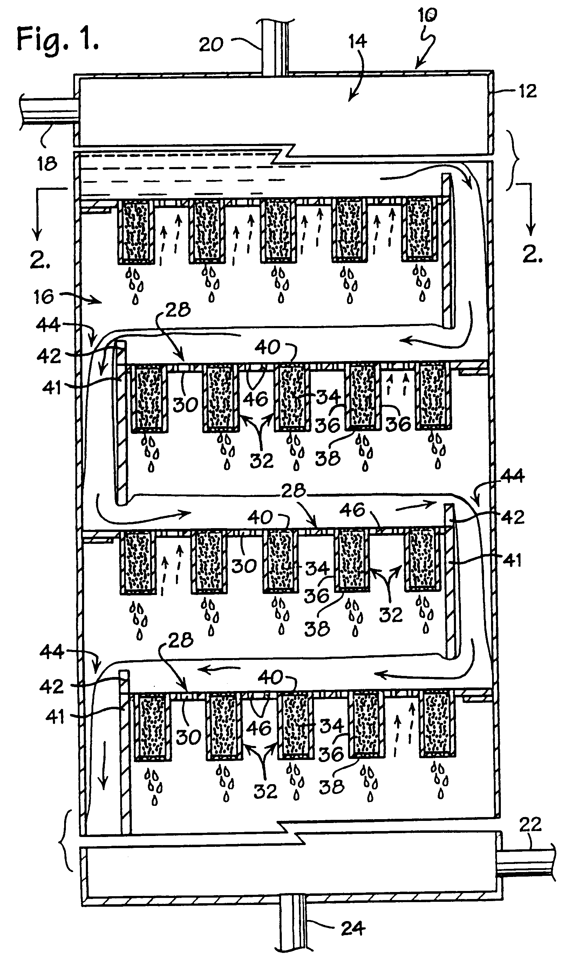

Referring now to the drawings in greater detail, and initially to Fig. 1, a reaction with distillation column in accordance with the present invention is represented broadly by the numeral 10. Column 10 may be any of various types of distillation columns and mass transfer reactors and includes an external upright shell 12 which may be of cylindrical, rectilinear or other desired configuration. While the column 10 has been shown as rectilinear for purposes of illustration, in commercial applications the column will typically be of cylindrical construction. A generally open internal chamber 14 is formed within shell 12 and includes a reaction with distillation region 16 in which both mass transfer and chemical reaction occur concurrently. Typically, the column 10 will include one or more other regions in which other processing such as distillation and/or other mass transfer processes occur. These additional regions may be above and/or below reaction with distillation region 16. In addition, multiple reaction with distillation regions 16 may be provided and may be separated by regions in which only mass transfer occurs.

Column 10 includes an upper inlet pipe 18 for directing a fluid stream, typically a liquid stream, within the shell 12 and into an upper portion of chamber 14. An upper outlet pipe 20 is provided for removing a vapor stream from the chamber 14 as an overhead. An inlet pipe 22 in a lower portion of chamber 14 allows for charging of a fluid stream such as a vapor stream to the column 10. A lower outlet pipe 24 is positioned in shell 12 for removal of a liquid bottoms. Additional inlet and outlet pipes and other column components such as reboilers and the like may also be provided.

A distributor (not shown) may optionally be utilized to feed a liquid stream into the reaction with distillation region 16. Any of various suitable types of collectors (not shown) may also be provided to collect the liquid stream from an upper region adjacent region 16 and feed it to the distributor. Similarly, the liquid stream leaving the region 16 may be collected by a device which feeds the liquid stream to an underlying region such as one in which only distillation occurs.

In accordance with the present invention, a plurality of reaction with distillation structures designated generally by the numeral 28 are provided within region 16. Each structure 28 includes a tray 30 and a plurality of spaced apart containers or troughs 32 which are coupled with tray 30 and extend downwardly therefrom. Each tray 30 is disposed generally horizontally and is suitably supported, such as on shell 12. The troughs 32 are filled with catalyst particles 34 and can be of any suitable cross-sectional configuration. As illustrated, the troughs 32 are generally rectilinear and extend in parallel rows between the opposed sides of shell 12. The longitudinal horizontal axes of troughs 32 in one structure 28 are shown in parallel orientation to the same axes of troughs 32 in adjacent structures 28. The orientation, however, may be varied anywhere between parallel and a 90° angle. It will also be appreciated that the troughs 32 need not extend completely between the opposed sides of the shell and in some applications it may be preferred that they do not. As another example, the catalyst filled troughs 32 can be generally cylindrical and can be arrayed in a predetermined pattern on the tray 30. Various other configurations and arrangements are possible and are within the scope of the invention.

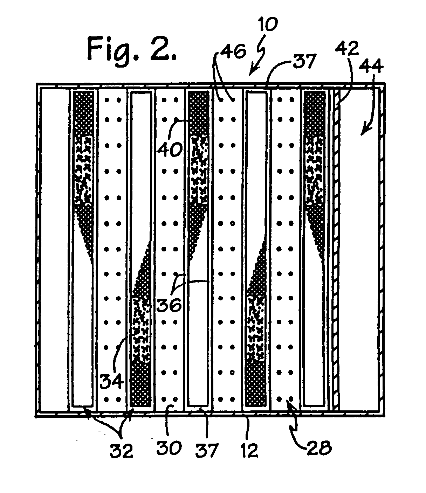

Each of the troughs 32 includes parallel side walls 36 and parallel end walls 37 (Fig. 2) which are joined together. A bottom 38 and a cover 40 are joined to the side walls 36 and end walls 37 to complete the rectilinear enclosure. The side walls 36 are suitably connected to the tray 30 in a manner such that cover 40 is coplaner with tray 30. The cover 40 may be removable to allow for the loading of the catalyst particles 34 into the trough 32. The cover 40 is formed of perforate material such as screening or other mesh-like material which allows for the passage of liquid from the tray 30 into the trough 32. The intersticial openings in the cover 40 should be sized small enough to prevent the catalyst particles 34 from passing through the cover. The bottom 38 and/or at least the lower portion of side walls 36 is also perforate to allow for the removal of liquid from within trough 32. Again, the openings in the bottom 38 or side walls 36 should be sized to prevent passage of the catalyst particles.

In order to prevent interference with the horizontal flow of liquid on trays 30, the bottom 38 of each trough 32 is preferably spaced from the underlying tray 30 so that it is not in contact with liquid which accumulates on that underlying tray. In certain construction, however, such as when troughs 32 are of a cylindrical configuration or when they do not extend all the way across the tray, it may be desirable for the troughs 32 to extend downwardly into contact with the underlying tray 30 or at least below the top surface of the liquid accumulating on that tray.

Each structure 28 also includes a downcomer plate 41, an upper portion of which functions as an overflow weir 42, positioned on the tray 30 downstream from the catalyst troughs 32. The weir 42 serves to cause accumulation of liquid on the tray 30 to a preselected depth before it overflows the weir 42. That portion of the liquid that overflows weir 42 flows through a bypass or downcomer 44 to the next lower reaction with distillation structure 28. The downcomer 44 may comprise any of various suitable devices for accommodating the flow of fluid and extends downwardly with a lower end spaced above the underlying tray 30. In some applications it may be desirable for the lower end of the downcomer 44 to extend below the level of the liquid on the underlying tray 30, while in other applications the downcomer lower end may terminate above the liquid level on the underlying tray. The downcomer 44 as illustrated is rectilinear in configuration with one wall being formed by plate 41 and the other walls being formed by the column shell 12. It will be appreciated that the downcomer 44 can assume many other configurations and can be formed in other suitable fashions. For example, when the troughs 32 are of cylindrical configuration, the downcomer 44 may be formed within one or more, including all, of the troughs 32. In such instances, the downcomer 44 would be centrally positioned and would extend generally from the top to the bottom of each trough. The catalyst bed would then fill the annular region surrounding the downcomer and would be generally ring-shaped in cross-section. A portion of the liquid entering the top of the downcomer in this configuration would pass downwardly through the downcomer without entering the catalyst bed while another portion would be forced from the downcomer through the catalyst bed.

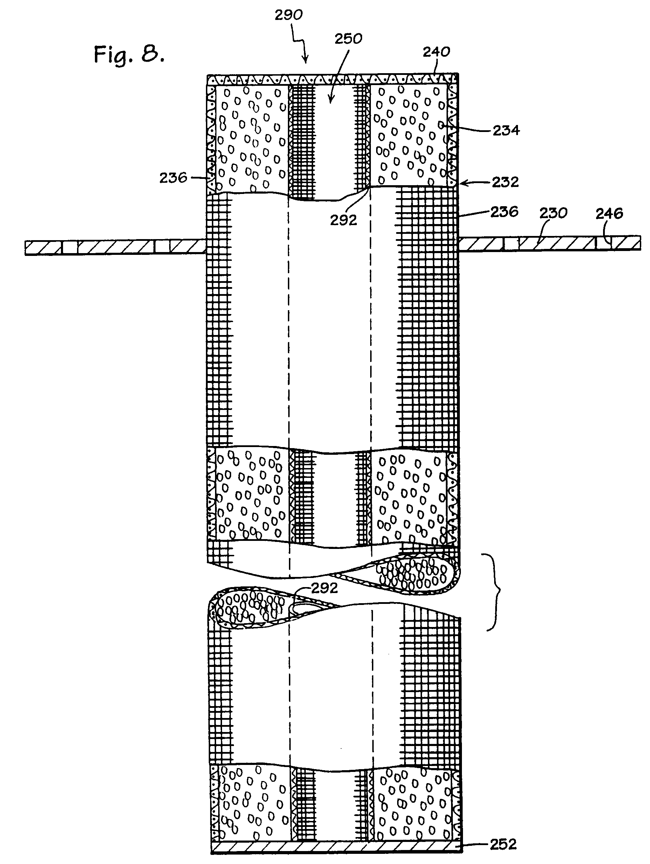

In another configuration, the troughs 32 could be rectilinear as illustrated but the downcomer would be formed within one or more, including all, of the troughs 32. The downcomers could be rectilinear or cylindrical in configuration and each would be generally centrally positioned and would extend from the top to the bottom of the associated trough 32. The bottom of the downcomer could also be closed by an imperforate or partially perforate plate to prevent or reduce liquid flow out of the bottom of the downcomer. All or a portion of the liquid entering the downcomer would then be forced to flow through the surrounding catalyst bed as it is removed from the trough. Variations of this configuration will be subsequently described with reference to other figures in the drawings, and particularly with reference to Fig. 8.

The structures 28 are arranged in the column 10 so that the liquid which flows through any downcomer 44 must then travel back across the surface of the underlying tray 30 to reach the next downcomer 44 in the underlying structure 28, the direction of flow being illustrated by solid arrows in Fig. 1. Forcing the liquid to flow back and forth in this manner allows it to more thoroughly interact with vapor which is brought into contact with the liquid on the trays 30.

As can be seen in Fig. 2, each of trays 30 includes a plurality of apertures 46 which extend through the tray 30 in those portions of the tray between troughs 32. The apertures 46 are sized and positioned to allow the passage of ascending vapor (as indicated by the upwardly directed broken arrows in Fig. 1) during operation of column 10. The vapor as it rises through the trays 30 is able to contact the accumulating liquid on the trays 30 for interaction therewith. Mass transfer between the liquid and vapor streams can thus occur on trays 30 and also in the open area surrounding the troughs 32 as the ascending vapor contacts the descending liquid.

The pressure differential that drives the vapor through the apertures 46 in trays 30 also serves to prevent the downward flow of liquid through the apertures 46. It will be appreciated that other types of devices may be used in place of or with apertures 46 to allow passage of the vapor through the trays 30. Examples of these alternatives include bubble caps and valves. In certain applications the use of these and other alternative devices may be preferred.

The catalyst particles 34 packed in troughs 32 form permeable catalyst beds in which catalytic reaction of liquid occurs. The catalyst particles 34 may be formed of any suitable catalyst desired for a particular catalytic reaction process occurring within column region 16. The catalyst may be an acidic or basic catalyst or may comprise catalytic metals and their oxides, halides or other chemically reacted states. Molecular sieves may also be utilized as the catalyst. The catalyst should be heterogeneous with the system reaction and the fluids charged to the column 10. By way of example, acid cation exchange resins may be used for dimerization, polymerization, etherification, esterification, isomerization, and alkylation reactions. Other catalysts such as molecular sieves, magnesia, chromia and brucite may be used for isomerization reactions.

The catalyst particles 34 can be cylindrically shaped extrudates or can be in the form of small beads or the like or may comprise irregularly shaped granules or fragments. The term "particles" as used herein is intended to encompass all of the foregoing. The size of the catalyst particles may be varied depending upon the requirements of the particular applications. It will also be appreciated that the catalyst particles 34 could be formed into a porous slab instead of being packed in troughs 32. The need to provide an enclosure to house the catalyst particles would thus be eliminated. This is contemplated by and is within the scope of the invention.

In a method in accordance with the present invention, a fluid stream, preferably comprising a liquid stream, is charged to the column 10 such as through upper inlet pipe 18. The liquid stream may optionally pass through one or more regions, such as distillation zones, before it is fed to the reaction with distillation region 16. A vapor stream may also be charged to the column 10, such as through lower inlet pipe 22, and then directed to region 16. The vapor stream may, if desired, be directed through one or more intermediate regions. Alternately, the vapor stream may be generated within one or more regions below reaction with distillation region 16.

The liquid stream is charged to the uppermost reaction with distillation structure 28 and then flows across and accumulates on the associated tray 30 at flow rates which exceed the permeability through troughs 32. A first portion of the accumulating liquid is able to flow through the covers 40 of the catalyst filled troughs 32 and descend through the catalyst beds formed by the catalyst particles 34. Because the liquid accumulating on the tray 30 creates a liquid head, the liquid is continually forced through troughs 32 with a pressure determined by the liquid head. This pressurized flushing action constantly presents fresh liquid feed to the catalyst and removes the reaction product from contact with the catalyst. The catalyst is thus able to operate at high efficiencies, including near theoretical efficiency in certain processes.

Another portion of the liquid accumulating on each tray 30 is allowed to overflow the weir 42 and enter the downcomer 44 for passage to the underlying tray 30. The liquid traveling through downcomer 44 is thus able to descend between the trays without having to pass through the catalyst filled troughs 32. The use of downcomers 44 in this manner allows the hydraulic capacity of the column 10 to greatly exceed that of columns in which all of the liquid must pass through the catalyst bed.

The ratio of liquid which flows through troughs 32 to that which flows through downcomer 44 can, of course, vary widely depending upon the particular requirements of individual processes occurring within the column region 16. The amount of liquid passing through the catalyst troughs 32 will, in some applications, be selected to maximize the reactivity of the catalyst. As more liquid flows through the catalyst troughs 32, however, the average effective flow path of liquid across trays 30 and the residence time of the liquid on the trays is reduced. As a result, the effectiveness of the vapor-liquid interaction on the trays in reduced. Accordingly, the amounts of liquid flowing through troughs 32 and downcomer 44 must be balanced to achieve the mass transfer and catalytic efficiencies desired for particular processes.

As liquid exits the catalyst troughs 32, it may further contact and interact with the vapor stream ascending through the surrounding open space. The amount of liquid and vapor interaction which occurs in the open area surrounding the troughs 32 will typically be less than that which takes place as the vapor stream passes through the apertures 46 in trays 30 and bubbles through the liquid which is on the trays 30. It will be appreciated that liquid and vapor interaction in the open area surrounding the troughs 32 can be increased if desired by the placement of packing in such area. The packing may comprise any of various suitable plate-like, ring type or saddle type packing or other structures which are commercially or otherwise available.

It can thus be appreciated that the reaction with distillation structures 28 can accommodate a large volumetric flow rate of the liquid stream while still providing for high reactivity and mass transfer performance. The downcomer 44 on each tray 30 allows the increased flow rate to occur by permitting liquid to flow between the trays 30 without having to first pass through the catalyst beds provided in troughs 32. That portion of the liquid which does not reach the downcomer 44 enters troughs 32 under pressure from the liquid head developed by the liquid accumulating on the associated tray 30. This pressure causes more uniform and rapid distribution of the liquid throughout the catalyst bed and results in increased catalyst efficiency by removing the reaction product from contact with the surface of the catalyst. Mass transfer is also facilitated by causing the liquid stream to flow back and forth across descending levels of trays 30 where it is forced to interact with the vapor which is bubbling through the tray apertures 46.

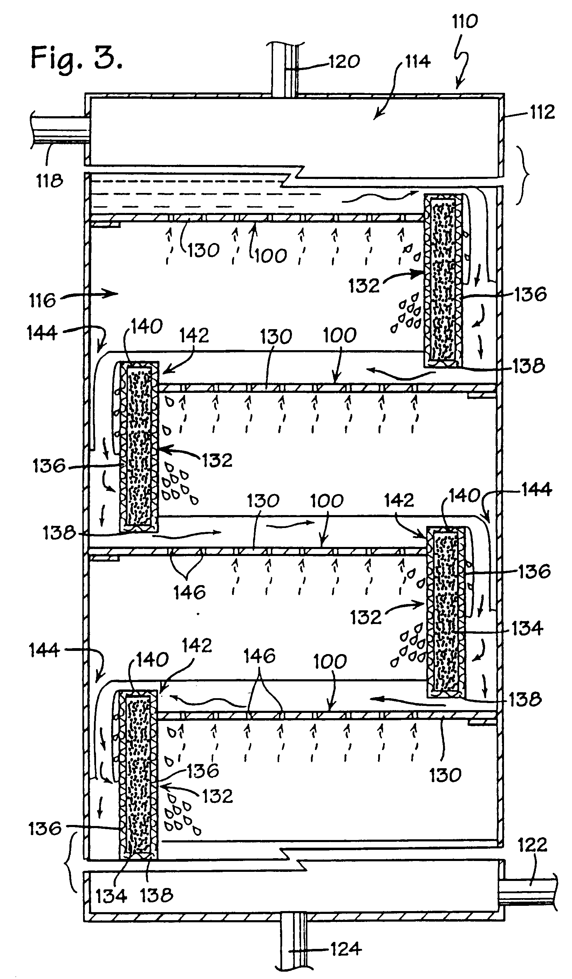

Turning now to Fig. 3, an alternate embodiment of a reaction with distillation structure is broadly designated by the numeral 100. A plurality of such structures 100 are shown applied within a column 110 which may be of the same type as column 10 previously described. Portions of column 110 which correspond to like portions described with respect to column 10 have been assigned like numerals preceded by the prefix "1". A detailed description of those portions will not be repeated herein.

A plurality of the reaction with distillation structures 100 are arrayed in successive layers within the reaction with distillation region 116 of column 110. Each structure 100 comprises a tray 130 which is suitably supported, such as on the column shell 112, and a catalyst filled trough or container 132 which is disposed at one end of tray 130. Containers 132 are similar to troughs 32 previously described in that each is filled with catalyst particles 134 which form a catalyst bed for the catalytic reaction of liquid. Each container 132 likewise has a pair of side walls 136, a pair of end walls (not shown), a bottom 138 and a cover 140.

The containers 132 may extend completely or partially between opposed sides of shell 112. The container 132 in each structure is shown oriented parallel to containers in adjacent structures. Such orientation may, however, be varied between parallel and 90°.

Unlike the troughs previously described, a single container 132 is positioned at the end of each tray 130 and extends upwardly above as well as downwardly below the surface of the tray 130. That portion of each container 132 which extends above the tray 130 functions as an overflow weir 142 which causes the accumulation of liquid on tray 130. The container side wall 136 which is closest to the shell 112 also forms part of a bypass or downcomer 144 into which the liquid overflows from tray 130 and is directed to the underlying tray 130. The remaining walls of the downcomer 144 are formed by the walls of column shell 112. The downcomer 144 is not limited to the described construction and configuration but may comprise any of various suitable devices for accommodating the flow of liquid.

The cover 140 and sidewalls 136 of each container 132 are made of perforate material such as screen or mesh which is capable of retaining the catalyst particles 134 but permitting the ready passage of fluids. The bottom 138 is also shown as being formed of perforate material but it may alternately be formed of imperforate material.

The tray 130 includes a plurality of apertures 146 which accommodate the upward passage of vapor but generally do not permit the downward passage of liquid during operation of column 110. Alternative devices such as the bubble caps and valves previously mentioned may be substituted for apertures 146 to perform the same function.

The catalyst filled containers 132 extend downwardly below the associated tray 130 a sufficient distance so that the lower portion of each container 132 extends below the surface of the liquid on the underlying tray 130. When a sufficient liquid flow rate is established, the containers 132 thus cause liquid to back up in each downcomer 144. This backing up of liquid, which is normal for trays, is particularly advantageous because it creates a liquid head which forces liquid through the lower portion of the container 132 and the associated catalyst bed in a generally horizontal direction. Liquid which flows laterally through catalyst containers 132 travels a much shorter distance than liquid which enters the containers 132 through covers 140 and travels downwardly through the containers. The overall resistance to fluid flow through the catalyst containers 132 is thereby reduced by the use of the liquid head to drive a portion of the liquid laterally through the container 132. This results in an increase in the hydraulic capacity of the containers 132 above that which could ordinarily be accomplished by forcing all of the liquid to flow downwardly from the top towards the bottom of the catalyst bed within each container 132. Because the resistance to flow is directly proportional to the distance through which the liquid flows and is inversely proportional to the cross-sectional area of flow, it can be readily appreciated that the flow of liquid laterally through the containers 132 can significantly reduce the resistance to liquid flow.

Structures 100 function in a similar manner to those previously described with respect to column 10. Mass transfer resulting from vapor and liquid interaction occurs as the vapor bubbles upwardly through the apertures 146 and mixes with the liquid flowing across trays 130. The catalyst in containers 132 operates at high efficiency because liquid is forced through the catalyst bed not only by the liquid head developed by the liquid accumulating on each tray 130 and the liquid cresting over weir 142 but also by the backing up of liquid in downcomer 144. Greater liquid flow rates through column 110 can be achieved with the use of the open downcomer 144 than would otherwise be possible if all of the liquid were forced to flow through a catalyst packed downcomer. Notably, the hydraulic capacity of the catalyst containers is also enhanced by causing liquid to back up in downcomers 144 and exert a horizontally directed pressure which causes liquid to flow laterally into the containers 132 through the permeable side wall 136 adjacent the associated downcomer.

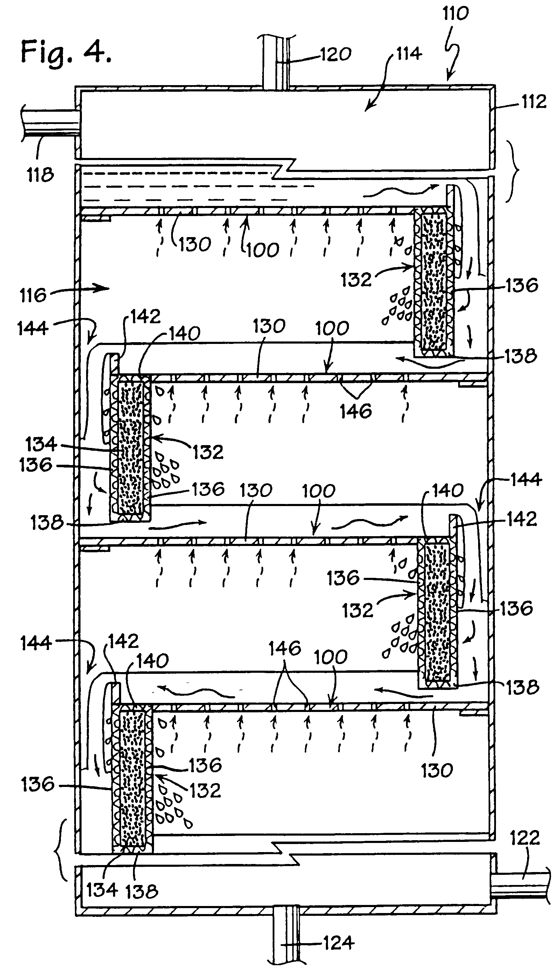

It will be appreciated that the reaction with distillation structures 100 can be modified and still achieve the objectives of and be encompassed by the present invention. One such modification is illustrated in Fig. 4, where the catalyst containers 132 do not extend upwardly beyond the upper surface of trays 130. Instead, the container cover 140 is generally coplaner with the tray 130 and a solid plate 142 extends upwardly beyond the cover and functions as an overflow weir which causes the accumulation of liquid on tray 130. The plate 142 is shown in vertical alignment with the downstream side wall 136 of container 132 so that a portion of the liquid accumulating on tray 130 is forced through the container cover 140. Alternatively, the plate 142 could be located on the opposite or upstream side wall 136 so that liquid would enter the container 132 through cover 140 only after spilling over plate 142.

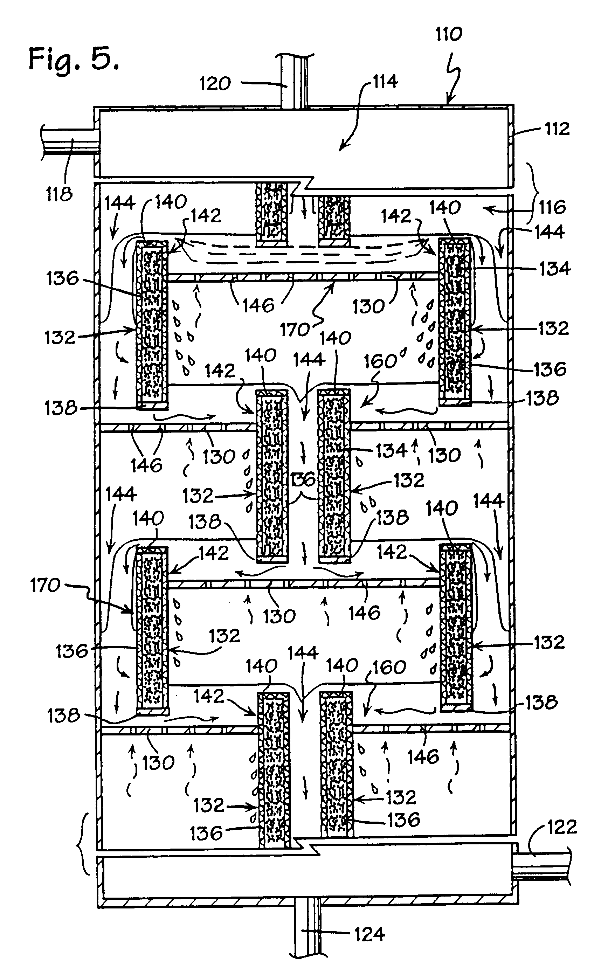

A more extensive modification to the reaction with distillation structure 100 shown in Fig. 3 is illustrated with reference to Fig. 5. In Fig. 5, alternating layers of reaction with distillation structures 160 and 170 are provided and are configured to provide for a double-pass flow scheme in contrast to the single-pass scheme illustrated in Fig. 3. Structures 160 comprise a pair of generally coplaner trays 130, each of which has a catalyst container 132 positioned at the end thereof and is similar to the structures 100 in Fig. 3. The structures 160, however, are oriented so that the containers 132 are centrally positioned in spaced apart relationship. The spacing between those containers 132 forms a central bypass or downcomer 144 into which liquid flows and accumulates as it overflows the tops of the containers. Accumulation of liquid in downcomer 144 is preferably achieved by providing limited clearance between the container bottoms 138 and the underlying tray 130. The imperforate bottoms 138 of containers 132 may optionally be extended into the downcomer 144 to restrict the opening at the bottom end thereof and facilitate the accumulation of liquid within the downcomer. This accumulating liquid develops a liquid head which forces the liquid laterally through the catalyst beds in both associated containers 132. It will be appreciated that the laterally flowing liquid will also gravitate downwardly under the influence of gravity and the influence of liquid flowing downwardly within the catalyst bed from above. The resultant directional flow of the liquid may thus be only generally horizontal. Advantageously, the laterally flowing liquid travels a shorter distance and encounters less flow resistance than that liquid entering containers 132 through covers 140 and the hydraulic capacity of the containers is correspondingly increased.

Liquid is directed from each structure 160 to the immediately underlying structure 170 which has catalyst containers 132 positioned at both ends of a single tray 130. Liquid which accumulates on the tray 130 of structure 170 is directed through either of containers 132 on the ends of tray 130 or through the downcomers 144 positioned between each container 132 and the column shell 112. This double-pass arrangement can accommodate greater liquid flow and more catalyst than the single-pass configuration of Fig. 3. It will be appreciated that three-pass, four-pass, five-pass or large arrangements are possible for increasingly greater liquid handling and catalyst containing capacities.

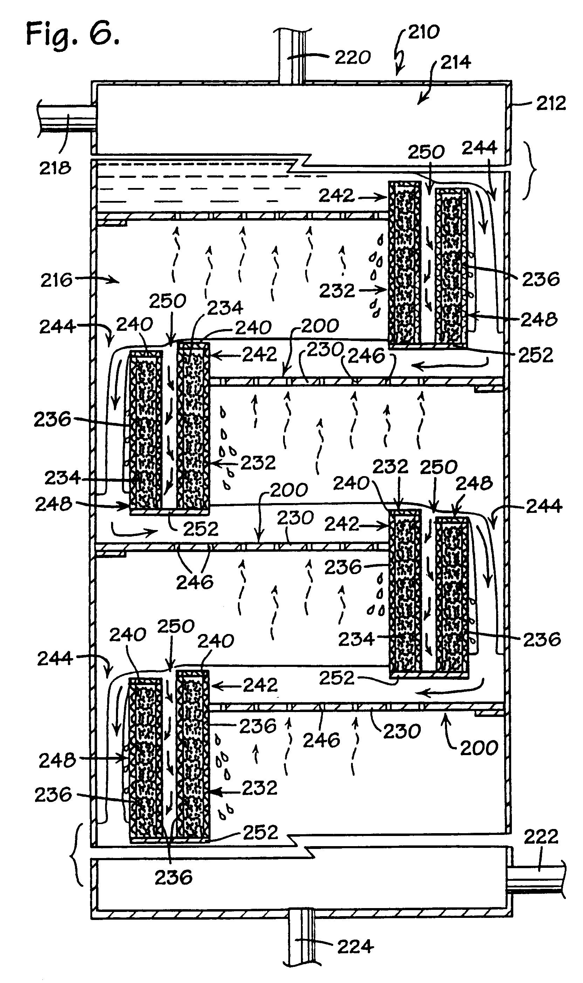

A further embodiment of a reaction with distillation structure in accordance with the present invention is shown in Fig. 6 and is represented by the numeral 200. Like reference numerals are again used to designate like parts from the other embodiments but are preceded by the prefix "2". Each reaction with distillation structure 200 is similar to the structures 100 shown in Fig. 3 except that a second catalyst container 248 is spaced downstream from the catalyst container 232 positioned at the end of each tray 230. The spacing between the containers 248 and 232 creates a region or zone 250 which is open at the top to accommodate the flow of liquid into the zone 250 as it overflows the top of container 232. The zone 250 is preferably closed at the bottom by an imperforate plate 252 which prevents liquid from flowing out of the bottom of zone 250. The liquid flowing into the zone 250 is thus forced to accumulate in zone 250 and can exit therefrom only by flowing through the catalyst beds within containers 248 and 232. Notably, the liquid flowing through the spaced apart catalyst beds encounters less resistance to flow than it would encounter if it were to flow through a catalyst bed having the combined thickness of the beds provided in containers 248 and 232.

In certain applications it may be desirable to provide plate 252 with a limited number of perforations to allow a portion of the liquid within zone 250 to flow through plate 252 while still forcing other portions of the liquid through containers 248 and 232, respectively.

Each structure 200 also includes a bypass or downcomer 244 such as previously described. The downcomer 244 is formed by the adjacent side wall 236 of container 248 and the walls of column shell 212. Preferably, liquid is prevented from accumulating in downcomer 244 so that it does not counteract the pressure generated by the liquid accumulating in zone 250 and thereby reduce the flow of liquid from zone 250 through container 248. This can be accomplished by spacing the lower surfaces of the containers 248 and 232 sufficiently above the underlying tray 230 or by limiting the volume of liquid flow entering the downcomer 244. In certain applications, the flow capacity of containers 248 and 232 may be sufficient to accommodate all of the liquid flowing on tray 230. In such applications, no liquid would overflow into downcomer 244 but liquid would still enter the downcomer 244 after passing laterally through container 248.

Reaction with distillation structures 200 provide the same advantages previously described with respect to reaction with distillation structures 28 and 100; namely, enhanced mass transfer and catalyst performance as well as increased hydraulic capacity. In addition, the use of spaced apart containers 248 and 232 increases the surface area of the catalyst beds through which the liquid flows and decreases the distance that the liquid must flow in comparison to a single container having twice the thickness of containers 248 and 232. The spaced apart containers 248 and 232 thus significantly reduce the resistance to fluid flow and permit a greater volumetric flow of liquid to be achieved.

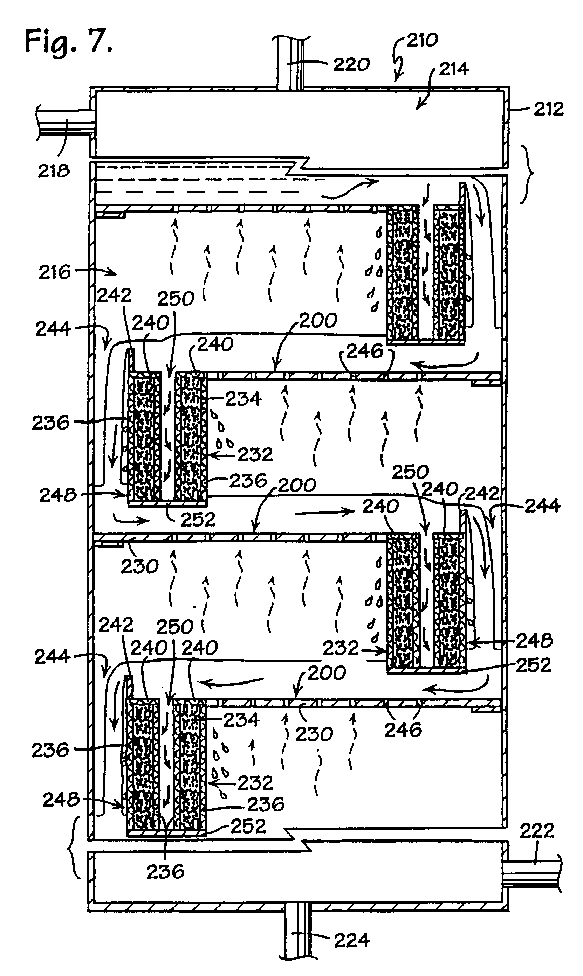

The reaction with distillation structures 200 of Fig. 6 are shown in a modified form in Fig. 7 wherein the tops of the containers 232 and 248 do not extend above the surface of tray 230. Instead, a solid plate 242 extends upwardly from the downstream side wall 236 of container 248 to form an overflow weir. It will be appreciated that the plate 242 could alternatively extend upwardly from upstream catalyst container 232 if desired.

Turning now to Fig. 8, a reaction with distillation structure 290 is provided which utilizes a plurality of catalyst containers, only one of which is illustrated and is designated by the numeral 232, which are similar to those previously described except they are cylindrical in configuration. The container 232 has a perforate outer side wall 236 and a zone 250 is formed within container 232 by a cylindrical member 292 which also forms the inner side walls of container 232. The annular region between the member 292 and the outer side wall 236 is filled with catalyst particles 234 and the member 292 is perforate to accommodate the passage of liquid between the zone 250 and the catalyst bed formed by the catalyst particles 234.

The zone 250 is open at the top to permit the flow of a portion of the liquid from the tray 230 into the zone 250 without passing through the surrounding catalyst bed. The bottom of zone 250 is shown closed by an imperforate plate 252 which forces liquid entering zone 250 to accumulate and exit through the surrounding catalyst bed in container 232 under the influence of the liquid head created by the accumulated liquid. While the zone 250 has been shown extending to the bottom of the catalyst bed, it need not necessarily do so. Instead, the zone 250 may extend downward into the catalyst bed and terminate above the bottom edge of the catalyst bed. In some applications, the plate 252 may contain a limited number of perforations to allow a portion of the liquid to exit zone 250 through the plate 252 without passing through the catalyst bed. In other applications, plates 252 may be provided on only some of the containers 232. The zone 250 in those containers 232 which lack plates 252 thus functions as an open downcomer which allows liquid entering zone 250 to pass to an underlying tray 230 without passing through the catalyst bed. Liquid can be caused to accumulate on tray 230 by extending the container 232 above the top surface of tray 230 as illustrated or by using a cylindrical solid plate as an overflow weir. If a solid plate is used as an overflow weir, the top of the catalyst bed may be positioned below the level of the tray 230. In such a configuration, the solid plate should be extended below the level of the tray a sufficient distance so that it overlaps the top portion of the catalyst bed.

Reaction with distillation structure 290, employing cylindrical catalyst containers 232, can be utilized in a manner like that previously described with reference to other structures, such as structures 200, and has the attendant advantages. Structure 290 is particularly adapted for use in processes which do not require a large amount of catalyst for effecting catalytic reaction of the liquid stream.

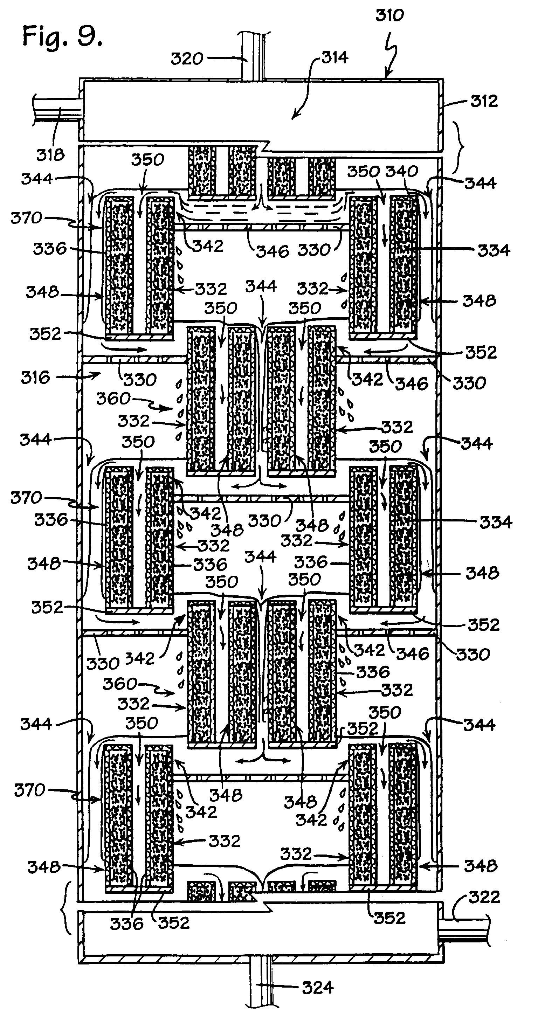

Still further embodiments of reaction with distillation structures, broadly designated by the numerals 360 and 370, are shown in Fig. 9 which is a double-pass version of the arrangement shown in Fig. 6. Like reference numerals preceded by the prefix "3" have been utilized to refer to components previously described. Structures 360 and 370 are placed in alternating layers within region 316 of column 310 and are generally arranged so that liquid flowing from each structure will encounter a tray 330 of an immediately underlying structure. This arrangement serves to minimize the opportunity for liquid to bypass any of structures 360 and 370 as it descends through region 316.

Structure 360 is similar in construction to structure 200 shown in Fig. 6 except that a second pair of catalyst containers 332 and 348 and an associated tray 330 are utilized with each structure 360. Each structure 360 is arranged so that the pairs of catalyst containers 348 are centrally positioned with the associated trays 330 extending from the containers 332 to the column shell 312. The catalyst containers 332 and 348 are generally rectilinear in configuration and extend partially or completely between opposed sides of shell 312. The containers 332 and 348 may, however, be constructed in other configurations from that described and illustrated.

As previously described, a catalyst feed region 350 which is open at the top to the flow of liquid is formed between each pair of catalyst containers 332 and 348. In addition, a bypass or downcomer 344 is formed in the spacing between the innermost containers 348 so that liquid which flows over the tops of containers 348 is directed into the downcomer 344 once the catalyst feed regions 350 are filled. In order to prevent vapor from flowing upwardly through the downcomer 344, a suitable static seal is provided. In order to permit the flow of liquid from within the adjacent containers 348 into the downcomer 344, it is preferred that the liquid backup in downcomer 344 only fills a lowermost portion of the downcomer.

Liquid is directed from downcomer 344 of structure 360 through the central opening in plate 352 and encounters the underlying reaction with distillation structure 370. Structure 370 is generally a two-pass version of the structure 200 shown in Fig. 6. Each structure 370 thus includes a central tray 330 with a pair of spaced apart catalyst containers 332 and 348 which are positioned at both ends of the central tray 330. Liquid on structure 370 is received generally centrally and is then forced to flow outwardly along tray 330 toward either end thereof. Liquid then can either enter container 348, region 350, container 332 or downcomer 344 for passage to the underlying tray 330 of structure 360.

Reaction with distillation structure 360 has, in addition to the benefits presented by the structures previously discussed, the added advantage of increasing the amount of liquid flow which can be directed through the catalyst beds within containers 332 and 348. This is accomplished by utilizing four separate catalyst packed containers within each structure 360 and permitting lateral flow of liquid through each container. The number of containers used in each structure is not limited to four but may include more than that number. Flow volume through the catalyst beds is also increased by the use of multiple feed regions 350 which must be filled before liquid will enter the central downcomer 344. This ensures that a maximum liquid head is always available to drive the liquid laterally through the catalyst beds associated with the regions 350. Notably, in some applications the hydraulic capacity of the catalyst beds will be sufficient to accommodate the entire volumetric flow of liquid descending through the reaction with distillation region 316. Even greater liquid handling and catalyst containing capacities can be obtained by arranging the structures 360 and 370 to provide a three-pass, four-pass or greater configuration.

While containers 332 and 348 are shown positioned so that their covers 340 extend above the top surface of trays 330 to form overflow weirs 342, it will be appreciated that a solid upright plate may instead be provided for this purpose. The plate could be placed upstream from the containers, such as at the edge of the tray 330, or downstream at the edge of downcomer 344, or anywhere in between if desired.

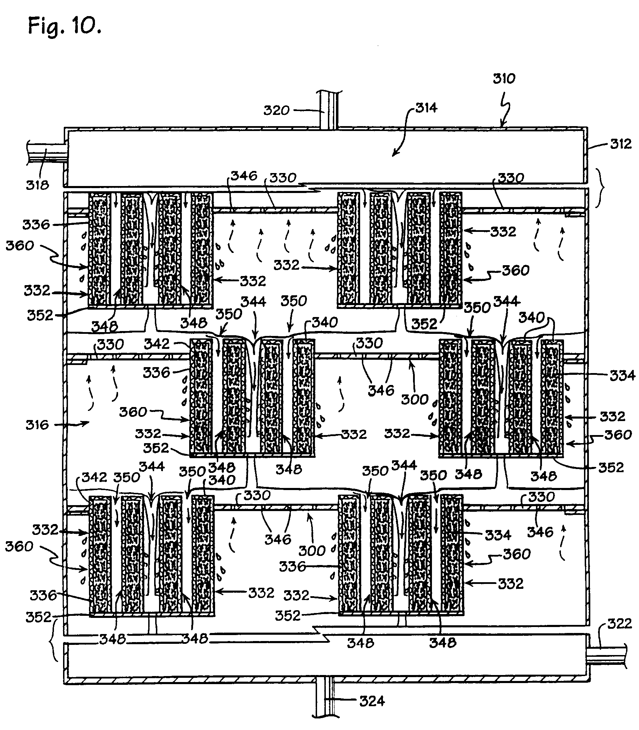

Turning now to Fig. 10, it can be seen that multiple reaction with distillation structures 360 can be provided at each level within column region 316. As previously described, each structure 360 comprises two pairs of catalyst containers 332 and 348 and a portion of an associated tray 330. A catalyst feed region 350 is formed between each pair of containers 332 and 348 and a downcomer 344 is provided between the paired containers 332 and 348. Preferably, in the structure 360 which is placed closest to shell 312 at each level, the containers 332 and 348 are sized so that they do not extend completely between the opposed sides of the shell 312. This permits a portion of the liquid on associated tray 330 to travel around the ends of the containers 332 and 348 to feed the narrow tray portion which extends between the shell 312 and the side wall 336 of the container 332 which is nearest the shell 312.

The structures 360 are positioned in a vertically staggered arrangement so that the discharge from each downcomer 344 contacts the tray 330 of an underlying structure. This arrangement reduces the opportunity for liquid to bypass a level of structures and the associated mass transfer which occurs at each level. While only two structures 360 have been shown at each level within region 316, in many applications it will be desirable to use more than two such structures to provide a multiple-pass arrangement. It will be appreciated that the mass transfer performance of the structures 360 is reduced as the tray 330 is reduced in area and divided into numerous smaller segments by the multiple containers 332 and 348. Accordingly, the increased liquid flow rate and catalyst capacity which can be achieved by placement of a number of structures 360 at each level must be balanced against the accompanying decrease in mass transfer performance which can be obtained.

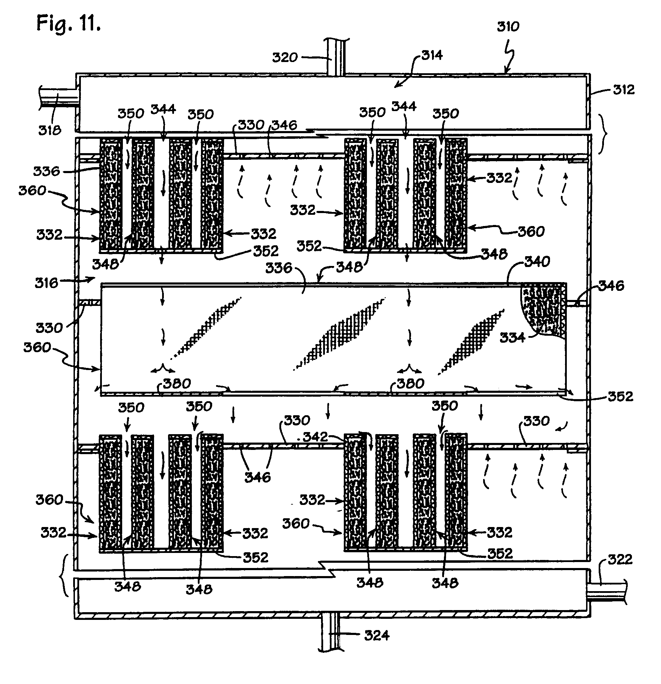

While the horizontal longitudinal axes of the containers 332 and 348 in adjacent levels of structures 360 have been shown in parallel alignment in Fig. 10, in some applications it may be desired or preferred that they extend at angles up to and including 90°, such as is shown in Fig. 11. In Fig. 11, the longitudinal axes of containers 332 and 348 at one level extend at right angles to the longitudinal axes of containers 332 and 348 in adjacent levels. In order to prevent liquid from passing from the downcomer 344 discharge at one level directly into the open top of an underlying downcomer 344, an imperforate plate 380 can be provided to close the bottom of each downcomer along that portion which lies directly over the inlet of an underlying downcomer. Preferably, the plate 380 is sized large enough to divert the liquid discharge away from the underlying regions 350 and containers 332 and 348 as well. Various other alternative arrangements are possible to reduce the amount of liquid which bypasses mass transfer at each level of structures 360.

## Claims

1. A process for operating a column (10,110,210,310) containing a plurality of reaction with distillation structures (28,100,160,170,200,360,370), each of the reaction with distillation structures comprising a tray (30,130,230,330), a catalyst bed (32,132,232,248,332,348) extending downwardly below the tray, and a bypass (44,144,244,344) which allows a liquid stream to descend from the tray without passing through the catalyst bed; the process comprising the steps of supplying a liquid stream to one of the reaction with distillation structures and causing an accumulation of the liquid stream on the tray thereof; directing a first portion of the accumulated liquid stream through the catalyst bed (32,132,232,248,332,348) for catalytic reaction to form a reaction product; directing a second portion of the accumulated liquid stream through the bypass (44,144,244,344); accumulating at least part of the first and second portions of the liquid stream on an underlying reaction with distillation structure after passage of the first portion through the catalyst bed and the second portion through the bypass; and directing a vapour stream upwardly through the tray (30,130,230,330) for contact with the accumulated liquid stream.

2. A process according to claim 1, wherein the step of directing a first portion of the accumulated liquid stream through a catalyst bed comprises the step of directing the first portion of the accumulated liquid stream through a plurality of spaced apart catalyst beds (32,132,232,332) extending downwardly from the tray (30,130,230,330).

3. A process according to claim 1 or claim 2, including the step of causing the second portion of the liquid stream to accumulate in the bypass (144,244,344) and passing a part of the accumulated second portion of the liquid stream from the bypass through the catalyst bed for catalytic reaction to form the reaction product.

4. A process according to claim 3, including the step of directing part of the first portion of the liquid stream from the catalyst bed (132,232,332) into the bypass (144,244,344) for mixing with the second portion of the liquid stream prior to the step of accumulating the first and second portions on the underlying reaction with distillation tray (130,230,330).

5. A process for operating a column (210,310) containing a plurality of reaction with distillation structures (200,360,370), each of the reaction with distillation structures comprising a tray (230,330), a pair of catalyst beds (232,248;332,348) extending downwardly below the tray, and a zone (250,350) between the pair of catalyst beds which is open at the top to the passage of liquid; the process comprising the steps of supplying a liquid stream to one of the reaction with distillation structures and causing an accumulation of the liquid stream on the tray (230,330) of the reaction with distillation structure; directing at least a first portion of the accumulated liquid stream into the zone (250,350) between the pair of catalyst beds; passing at least a part of the first portion of the liquid stream from the zone (250,350) through one of the catalyst beds for catalytic reaction to form a reaction product; removing another part of the portion of the liquid stream from the zone without passing through the catalyst beds; and directing a vapour stream upwardly through the tray (230,330) for contact with the accumulated liquid stream.

6. A process according to claim 5, including the steps of providing a bypass (244,344) on at least one of the reaction with distillation structures to allow a second portion of the accumulated liquid stream to descend from the tray (230,330) without passing through the first and second catalyst beds and then directing the second portion of the accumulated liquid stream through the bypass (244,344).

7. A process according to claim 6, including the step of accumulating at least part of the first and **second** portions of the liquid stream on an underlying reaction with distillation structure after passage of the first portion through the pair of catalyst beds and the second portion through the bypass (244,344).

8. A process according to claim 7, including the step of directing part of the first portion of liquid stream from one of the pair of catalyst beds into the bypass for mixing with the second portion of the liquid stream prior to the step of accumulating the first and second portions on the underlying reaction with distillation tray.

9. A process according to claim 5, wherein each of the distillation structures comprises a further lower tray including a further pair of catalyst beds (232,248;332,348) with a zone therebetween which is open at the top to the passage of liquid, the further pair of catalyst beds being coupled with and extending downwardly below the lower tray; the process comprising the steps of supplying a liquid stream to one of the reaction with distillation structures and causing an accumulation of the liquid stream on the trays thereof; directing at least portions of the accumulated liquid stream into the first and second zones between the first and second pairs of catalyst beds; passing part of the portions of the liquid stream from the zones through the first and second pairs of catalyst beds for catalytic reaction to form a reaction product; removing another part of the portions of the liquid stream from the zones without passing through the first or second pairs of catalyst beds; and directing a vapour stream upwardly through the trays for contact with the accumulated liquid stream.

10. A process according to claim 9, including the steps of providing a bypass (244,344) on at least one of the reaction with distillation structures (200,360,370) between the first and second pairs of catalyst beds and directing part of the portions of the accumulated liquid stream into the bypass from one of the catalyst beds in each of the first and second pairs of catalyst beds.

11. A process according to claim 9, including the step of directing substantially all of the flow of the liquid stream through the first and second pairs of catalyst beds.

12. A process according to claim 10, including the step of directing a second portion of the accumulated liquid streams from the trays into the bypass (244,344) without passing through either of the first and second pairs of catalyst beds.

13. A process according to claim 12, including the step of accumulating at least part of the first portions and the second portion of the liquid stream on an underlying reaction with distillation structure after passage of the first portion through the first and second pairs of catalyst beds and the second portion through the bypass (244,344).

14. A process for operating a column (210,310) containing a plurality of reaction with distillation structures (200,360,370), each of the reaction with distillation structures comprising a tray (230,330), a catalyst bed (232,248;332,348) extending downwardly below the tray, and a zone (250,350) within the catalyst bed which is open at the top to the passage of liquid, at least one of the reaction with distillation structures additionally comprising a bypass which allows a liquid stream to descend from the tray without passing through the catalyst bed; the process comprising the steps of supplying a liquid stream to one of the reaction with distillation structures and causing an accumulation of the liquid stream on the tray of the reaction with distillation structure; directing at least a first portion of the accumulated liquid stream into the zone (250,350) within the catalyst bed without passing through the catalyst bed; passing at least part of the first portion of the liquid stream from the zone through the catalyst bed for catalytic reaction to form a reaction product; directing a second portion of the accumulated liquid stream into the bypass without passing through the catalyst bed; passing the second portion of the accumulated liquid stream downwardly through the bypass; and directing a vapour stream upwardly through the tray for contact with the accumulated liquid stream.

15. A process according to claim 14, including the step of passing another part of the first portion of the liquid stream through the zone (250,350) without passing through the catalyst bed.

16. A process according to claim 15, including the step of accumulating the first portion of the liquid stream on an underlying reaction with distillation structure (200;360,370) after passage through the zone and the catalyst bed.

17. A process according to claim 16, including the step of directing a third portion of the liquid stream from the tray into the catalyst bed for the catalytic reaction to form the reaction product.

18. A structure for use in a column (10,110,210,310) for providing concurrent reaction with distillation of fluid streams flowing within the column, the structure comprising a tray (30,130,230,330) for accumulating liquid from a liquid stream; a container (32,132,232,248,323,348) coupled with the tray for containing a catalyst bed through which a first portion of the accumulated liquid is directed; and a bypass (44,144,244,344) coupled with the tray for allowing a second portion of the accumulated liquid to be directed from the tray without passing through the catalyst bed and means (46,146,246,346) for directing a vapour stream through the accumulated liquid for interaction therewith.

19. A structure according to claim 18, wherein the means for directing a vapour stream through the accumulated liquid comprises a plurality of apertures (46,146,246,346) in the tray (30,130,230,330) for permitting the vapour stream as it flows upwardly to pass through the tray and contact the accumulated liquid.

20. A structure according to claim 18, including a weir (42,142,242,342) on the tray for causing the accumulation of the liquid.

21. A structure according to claim 20, wherein the weir comprises a solid plate extending above the tray.

22. A structure according to claim 21, wherein the weir comprises a portion of the container.

23. A structure according to claim 18, wherein the container for containing the catalyst bed comprises a perforate side wall to permit passage of liquid through the side wall.

24. A structure according to claim 18, wherein the container for containing the catalyst bed comprises an imperforate side wall to block the passage of liquid through the side wall and a perforate bottom to allow the passage of liquid through the bottom.

25. A structure according to claim 18, wherein the container for containing the catalyst bed comprises a perforate cover to permit passage of the accumulated liquid into the container.

26. A structure according to claim 18, wherein the container for containing the catalyst bed comprises an imperforate cover to block the passage of liquid through the cover and a perforate side wall to permit passage of liquid from the tray and through the side wall.

27. A structure according to claim 18, including a second container (248,348) for containing a catalyst bed and spaced from the first-mentioned container (232,332).

28. A structure according to claim 27, wherein a portion of the tray between the first-mentioned and second containers includes the apertures for permitting the flow of the vapour stream through the tray.

29. A structure according to claim 27, wherein the first-mentioned and second containers have perforate walls adjacent a zone (250,350) between the first-mentioned and second containers, the zone having an upper end which is open to permit the flow of the accumulated liquid into the zone.

30. A structure according to claim 29, wherein the zone has a lower end (252,352) which is closed to the passage of liquid, whereby liquid leaving the zone (250,360) must pass through the perforate walls of either of the first and second containers.

31. A structure according to claim 30, wherein a side wall of the second container (248,348) defines at least one wall of the bypass (44,144,244,344).

32. A structure according to claim 31, including spaced apart third and fourth containers depending from the tray (330) and spaced from the first mentioned and second containers, wherein a second zone (350) between the third and fourth containers has an upper end which is open to permit the flow of at least a portion of the accumulated liquid into the second zone (350).

33. A structure according to claim 32, wherein the second zone (350) between the third and fourth containers has a lower end (352) which is closed to the passage of liquid, whereby liquid leaving the second zone (350) must pass through either of the third and fourth containers.

34. A structure according to claim 33, wherein a side wall of the third container defines another wall of the bypass (344), whereby liquid leaving the third container may flow into the bypass (344).

35. A structure according to anyone of claims 18-22, wherein a pair of spaced apart containers (232,248;332,348) couple with and extend below the tray for containing catalyst beds and there is a zone (250;350) between the containers which is open at the top to the flow of a third portion of the accumulated liquid (244;334).

36. A structure according to claim 35, wherein the containers for containing the catalyst beds comprise perforate side walls to permit passage of liquid through the side walls.

37. A structure according to claim 36, wherein the containers for containing the catalyst beds comprise perforate covers (340) to permit passage of the accumulated liquid into the containers.

38. A structure according to claim 35, wherein the containers have perforate walls adjacent the zone (350).

39. A structure according to claim 38, wherein the zone (350) has a lower end (352) which is closed to the passage of liquid, whereby liquid leaving the zone must pass through the perforate walls of either of the containers.

40. A structure according to claim 39, wherein one of the walls of one of the containers defines at least one wall of the bypass (344).

41. A structure according to claim 40, including another pair of spaced apart containers depending from the tray (330) and spaced from the first pair of containers, wherein a second zone (350) between the containers has an upper end which is open to permit the flow of at least a portion of the accumulated liquid from the tray into the second zone (350).

42. A structure according to claim 41, wherein the second zone (350) has a lower end (352) which is closed to the passage of liquid, whereby liquid leaving the second zone must pass through either of the another pair of containers.

43. A structure according to claim 42, wherein a side wall of one of the containers in the second pair of containers defines another wall of the bypass (344), whereby liquid leaving the third container may flow into the bypass (344).

44. A structure for use in a column (210,310) for providing concurrent reaction with distillation of fluid streams flowing within the column, the structure comprising a tray (230;330) for accumulating liquid from a liquid stream; a pair of spaced apart containers (232,248,332,348) coupled with and extending below the tray for containing catalyst beds through which a first portion of the accumulated liquid is directed; and a zone (250;350) between the containers which is open at the top to the flow of a second portion of the accumulated liquid from the tray into the zone (250;350), the containers having side walls in communication with the zone to permit the passage of part of the second portion of the liquid from the zone into the containers; and means (246;346) for directing a vapour stream through the accumulated liquid for interaction therewith.

45. A structure according to claim 44, wherein the means for directing a vapor stream through the accumulated liquid comprises a plurality of apertures (246;346) in the tray for permitting the vapour stream as it flows upwardly to pass through the tray (230;330) and contact the accumulated liquid.

46. A structure according to claim 44, wherein the zone (230,350) has a lower end (252;352) which is closed to the passage of liquid, whereby liquid leaving the zone (250;350) must pass through the perforate walls of either of the containers (232,248;332,348).

47. A structure according to claim 44, including another pair of spaced apart containers depending from the tray (330) and spaced from the first pair of containers, wherein a second zone (350) between the containers has an upper end which is open to permit the flow of at least a portion of the accumulated liquid from the tray (330) into the second zone.

48. A structure according to claim 47, wherein the first and second zones have lower ends (352) which are closed to the passage of liquid, whereby liquid leaving the first and second zones must pass through a container in the pairs of containers.

49. A structure according to claim 47, including a bypass (344) coupled with the tray (330) and positioned between the pairs of containers for receiving a portion of the liquid from adjacent containers.

50. A structure according to claim 47, including a bypass (344) coupled with the tray (330) for allowing a portion of the accumulated liquid to be directed from the tray (330) without passing through the catalyst beds.

51. A structure according to claim 49, wherein a wall of one of the containers defines at least one wall of the bypass (344).

52. A structure according to claim 51, wherein a wall of another of the containers defines another wall of the bypass (344).

53. A structure according to claim 52, including a weir (342) on the tray for causing the accumulation of the liquid.

54. A structure according to claim 53, wherein the weir (342) comprises a solid plate extending above the tray.

55. A structure according to claim 53, wherein the weir comprises a portion of one of the pair of containers.

56. A structure according to claim 53, wherein the containers comprise perforate covers to permit passage of the accumulated liquid into the containers.

57. A structure (290) for use in a column (210) for providing concurrent reaction with distillation of fluid streams flowing within the column, the structure comprising a tray (230) for accumulating liquid from a liquid stream; a container (232) coupled with and extending below the tray (230) for containing a catalyst bed through which a first portion of the accumulated liquid is directed; a zone (250) within the container which is open at the top to the flow of a second portion of the accumulated liquid from the tray (230) into the zone without passing through the catalyst bed, the container (232) having a perforate side wall in communication with the zone (250) to permit the passage of part of the second portion of the liquid from the zone into the container and means (246) for directing a vapour stream through the accumulated liquid for interaction therewith.

58. A structure according to claim 57, wherein the means for directing a vapour stream through the accumulated liquid comprises a plurality of apertures (246) in the tray for permitting the vapour stream as it flows upwardly to pass through the tray (230) and contact the accumulated liquid.

59. A structure according to claim 57, wherein the zone (250) has a lower end (252) which is closed to the passage of liquid, whereby liquid leaving the zone (250) must pass through the perforate side wall of the container.

60. A structure according to claim 57, wherein the zone (250) has a lower end which is at least partially open to the passage of liquid to permit at least part of the liquid to leave the zone without passing through the perforate side wall of the container.

61. A structure according to claim 57, including a weir (242) on the tray for causing the accumulation of the liquid.

62. A structure according to claim 61, wherein the weir (242) comprises a solid plate extending above the tray (230).

63. A structure according to claim 61, wherein the weir comprises a portion of the container (232).

64. A structure according to claim 57, wherein the container (232) is generally cylindrical in configuration and has a perforate cover (240) to permit passage of the accumulated liquid into the container (232).

65. A structure according to any one of claims 57 to 63, wherein the container (232) includes a perforate side wall spaced outwardly from the perforate side wall of the zone and wherein is included a catalyst bed in an annular region between the perforate side wall of the zone and the perforate side wall of the container.

66. A structure for use in a column (210;310) for providing concurrent reaction with distillation of fluid streams flowing within the column, the structure comprising a tray (230;330) for receiving liquid from a liquid stream; a catalyst bed (232,248,290;332,348) coupled with and extending below the tray; a generally open zone (250;350) within the catalyst bed, the zone (250;350) being open at the top to the flow of at least a portion of the liquid received on the tray into the zone without passing through the catalyst bed, the catalyst bed being generally permeable to the passage of liquid from the zone into the catalyst bed and means (246;346) for directing a vapour stream through the liquid received on the tray for interaction therewith.

67. A structure according to claim 66, including a plurality of apertures (246;346) in the tray for permitting the vapour stream as it flows upwardly to pass through the tray and contact the liquid received on the tray.

68. A structure according to claim 67, wherein the zone (250;350) has a lower end (252;352) which is closed to the passage of liquid, whereby liquid leaving the zone (250;350) must pass through the catalyst bed.

69. A structure according to claim 66, wherein the zone (250;350) has a lower end which is at least partially open to the passage of liquid to permit at least part of the liquid to leave the zone without passing through the catalyst bed.

70. A structure according to claim 66, including a weir (242;342) on the tray (230;330) for causing the liquid to accumulate on the tray (230;330).

71. A structure according to claim 70, wherein the weir comprises a solid plate extending above the tray.

72. A structure according to claim 70, wherein the weir comprises a portion of the catalyst bed.

73. A structure according to claim 66, wherein the catalyst bed (290) has an outer surface which is generally cylindrical in configuration.

74. A column (10,110,210,310) for providing concurrent reaction with distillation of fluid streams flowing within the column, the column comprising a shell (12) defining a generally open internal chamber (14); a region (16) positioned within the internal chamber (14) and containing a plurality of reaction with distillation structures according to any one of claims 18-19.

75. A column according to claim 74, including a zone (250) within the container (232) which is open at the top to the flow of a third portion of the accumulated liquid from the tray (230) into the zone without passing through the catalyst bed.

76. A column according to claim 75, wherein the zone (250) has a lower end (252) which is closed to the passage of liquid, whereby liquid leaving the zone (250) must pass through the container (232).

77. A column (210,310) for providing concurrent reaction with distillation of fluid streams flowing within the column, the column comprising a shell (12) defining a generally open internal chamber (14); a region (16) positioned within the internal chamber (14) and containing a plurality of reaction with distillation structures, each of the reaction with distillation structures comprising a tray for accumulating liquid from a liquid stream, a pair of spaced apart catalyst beds (232,248;332,348) coupled with and extending below the tray for receiving a first portion of the accumulated liquid, a zone (250;350) between the beds which is open at the top to the flow of a second portion of the accumulated liquid, and a bypass (244;344) coupled with the tray for allowing a third portion of the accumulated liquid to be directed from the tray without passing through the catalyst beds.

78. A column according to claim 77, wherein the distillation structures are arrayed in a plurality of vertically spaced apart levels within the region (16) and wherein the catalyst beds have generally horizontal longitudinal axes with the axes in one level extending at an angle of between 0 and 90 degrees to the orientation of the axes of the catalyst beds in an adjacent level.

79. A column according to claim 78, wherein the angle is approximately 90 degrees.

80. A column according to claim 79, including a plurality of apertures (246;346) in the tray (230,330) for permitting a vapour stream as it flows upwardly through the region to pass through the tray and contact the accumulated liquid.

81. A column according to claim 80, including a weir (242;342) on the tray for causing the accumulation of the liquid.

82. A column according to claim 81, wherein the weir (242;342) comprises a solid plate extending above the tray (230;330).

83. A column according to claim 81, wherein the weir (242;342) comprises a portion of the catalyst bed (232,248;332,348).

84. A column according to claim 81, including containers containing the catalyst beds (232,248;332,348) and wherein the containers comprise perforate side walls to permit passage of liquid through the side walls.

85. A column according to claim 84, wherein the containers comprise perforate covers to permit passage of the accumulated liquid into the containers.

86. A column according to claim 85, wherein the containers have perforate walls adjacent the zone (250;350).

87. A column according to claim 86, wherein the zone (250;350) has a lower end (252;352) which is closed to the passage of liquid, whereby liquid leaving the zone (250;350) must pass through the perforate walls of either of the containers.

88. A column according to claim 87, wherein one of the walls of one of the containers defines at least one wall of the bypass (244;344).

89. A column according to claim 88, including another pair of spaced apart containers depending from the tray (330) and spaced from the first pair of containers, wherein a second zone (350) between the containers has an upper end which is open to permit the flow of at least a portion of the accumulated liquid from the tray (330) into the second zone (350).

90. A column according to claim 89, wherein the second zone (350) has a lower end (352) which is closed to the passage of liquid, whereby liquid leaving the second zone must pass through either of the another pair of containers.

91. A column according to claim 90, wherein a side wall of one of the containers in the second pair of containers defines another wall of the bypass (344), whereby liquid leaving the third container may flow into the bypass.

## Patentansprüche

1. Ein Verfahren zum Betreiben einer Säule (10, 110, 210, 310), umfassend eine Mehrzahl Reaktions- mit Destillationsstrukturen (28, 100, 160, 170, 200, 360, 370), wobei jede der Reaktions- mit Destillationsstrukturen einen Boden (30, 130, 230, 330), ein Katalysatorbett (32, 132, 232, 248, 332, 348), das sich nach unten unter den Boden hinaus erstreckt, und einen Bypass (44, 144, 244, 344) umfaßt, der es einem Flüssigkeitsstrom ermöglicht, sich von dem Boden abwärts zu bewegen, ohne durch das Katalysatorbett zu treten; wobei das Verfahren die Schritte des Zuführens eines Flüssigkeitsstroms zu einer der Reaktions- mit Destillationsstrukturen und eines Herbeiführens eines Akkumulierens des Flüssigkeitsstroms auf dem zugehörigen Boden; des Leitens eines ersten Anteils des akkumulierten Flüssigkeitsstroms durch das Katalysatorbett (32, 132, 232, 248, 332, 348) zur katalytischen Reaktion, um ein Reaktionsprodukt zu bilden; des Leitens eines zweiten Anteils des akkumulierten Flüssigkeitsstroms durch den Bypass (44, 144, 244, 344); des Akkumulierens wenigstens eines Teils des ersten und zweiten Anteils des Flüssigkeitsstroms auf einer darunterliegenden Reaktions- mit Destillationsstruktur nach Durchtritt des ersten Anteils durch das Katalysatorbett und des zweiten Anteils durch den Bypass; und des Leitens eines Dampfstroms nach oben durch den Boden (30, 130, 230, 330) zum Kontakt mit dem akkumulierten Flüssigkeitsstrom umfaßt.

2. Ein Verfahren nach Anspruch 1, wobei der Schritt des Leitens eines ersten Anteils des akkumulierten Flüssigkeitsstroms durch das Katalysatorbett den Schritt des Leitens des ersten Anteils des akkumulierten Flüssigkeitsstroms durch eine Mehrzahl voneinander beabstandeter Katalysatorbetten (32, 132, 232, 332), die sich von dem Boden (30, 130, 230, 330) nach unten erstrecken, umfaßt.

3. Ein verfahren nach Anspruch 1 oder 2, umfassend den Schritt, das Akkumulieren des zweiten Anteils des Flüssigkeitsstroms in dem Bypass (144, 244, 344) und das Hindurchtreten eines Teils des akkumulierten zweiten Anteils des Flüssigkeitsstroms von dem Bypass durch das Katalysatorbett zur katalytischen Reaktion zu verursachen, um das Reaktionsprodukt zu bilden.

4. Ein verfahren nach Anspruch 3, umfassend den Schritt des Leitens eines Teils des ersten Anteils des Flüssigkeitsstroms von dem Katalysatorbett (132, 232, 332) in den Bypass (144, 244, 344) zum Mischen mit dem zweiten Anteil des Flüssigkeitsstroms vor dem Schritt des Akkumulierens des ersten und zweiten Anteils auf dem darunterliegenden Reaktions- mit Destillationsboden (130, 230, 330).

5. Ein Verfahren zum Betreiben einer Säule (210, 310), umfassend eine Mehrzahl Reaktions- mit Destillationsstrukturen (200, 360, 370), wobei jede derselben einen Boden (230, 330), ein Paar Katalysatorbetten (232, 248; 332, 348), das sich nach unten unter den Boden hinab erstreckt, und eine Zone (250, 350) zwischen dem Paar Katalysatorbetten umfaßt, die oben für den Durchtritt von Flüssigkeit offen ist; wobei das Verfahren die Schritte eines Zuführens eines Flüssigkeitsstroms zu einer der Reaktions- mit Destillationsstrukturen und eines Herbeiführens eines Akkumulierens des Flüssigkeitsstroms auf dem Boden (230, 330) der Reaktions- mit Destillationsstruktur; des Leitens wenigstens eines ersten Anteils des akkumulierten Flüssigkeitsstroms in die Zone (250, 350) zwischen dem Paar Katalysatorbetten; des Durchtretens wenigstens eines Teils des ersten Anteils des Flüssigkeitsstroms von der Zone (250, 350) durch eines der Katalysatorbetten zur katalytischen Reaktion, um ein Reaktionsprodukt zu bilden; des Entfernens eines weiteren Teils des Flüssigkeitsstroms aus der Zone ohne Durchtreten des Katalysatorbetts; und des Leitens eines Dampfstroms nach oben durch den Boden (230, 330) zum Kontakt mit dem akkumulierten Flüssigkeitsstrom umfaßt.

6. Ein verfahren nach Anspruch 5, umfassend die Schritte des Zurverfügungstellens eines Bypasses (244, 344) bei wenigstens einer der Reaktions- mit Destillationsstrukturen, um es einem zweiten Anteil des akkumulierten Flüssigkeitsstroms zu ermöglichen, sich von dem Boden (230, 330) nach unten zu bewegen, ohne durch die ersten und zweiten Katalysatorbetten hindurchzutreten, und dann des Leitens des zweiten Anteils des akkumulierten Flüssigkeitsstroms durch den Bypass (244, 344).

7. Ein Verfahren nach Anspruch 6, umfassend den Schritt des Akkumulierens wenigstens eines Teils der ersten und zweiten Anteile des Flüssigkeitsstroms auf einer darunterliegenden Reaktions- mit Destillationsstruktur nach Durchtritt des ersten Anteils durch das Paar Katalysatorbetten und des zweiten Anteils durch den Bypass (244, 344).

8. Ein Verfahren nach Anspruch 7, umfassend den Schritt des Leitens eines Teils des ersten Anteils des Flüssigkeitsstroms von einem der Katalysatorbettpaare in den Bypass zur Vermischung mit dem zweiten Anteil des Flüssigkeitsstroms vor dem Schritt des Akkumulierens des ersten und zweiten Anteils auf dem darunterliegenden Reaktions- mit Destillationsboden.

9. Verfahren nach Anspruch 5, wobei jede der Destillationsstrukturen einen weiteren unteren Boden umfaßt, der ein weiteres Paar Katalysatorbetten (232, 248; 332, 348) mit einer dazwischenliegenden Zone, die oben für den Durchfluß von Flüssigkeit offen ist, einschließt, wobei das weitere Paar Katalysatorbetten mit dem unteren Boden verbunden ist und sich nach unten unter diesen hinab erstreckt; wobei das Verfahren die Schritte des Zuführens eines Flüssigkeitsstroms zu den Reaktions- mit Destillationsstrukturen und des Herbeiführens eines Akkumulierens des Flüssigkeitsstroms auf deren Böden; des Leitens wenigstens von Anteilen des akkumulierten Flüssigkeitsstroms in die ersten und zweiten Zonen zwischen den ersten und zweiten Katalysatorbettpaaren; des Passierens eines Teils der Flüssigkeitsstromanteile von den Zonen durch die ersten und zweiten Katalysatorbettpaare zur katalytischen Reaktion, um ein Reaktionsprodukt zu bilden; des Entfernens eines weiteren Teils der Flüssigkeitsstromanteile von den Zonen ohne Passieren durch die ersten oder zweiten Katalysatorbettpaare; und des Leitens eines Dampfstromes nach oben durch die Böden zum Kontakt mit dem akkumulierten Flüssigkeitsstrom umfaßt.

10. Ein Verfahren nach Anspruch 9, umfassend die Schritte des Zurverfügungstellens eines Bypasses (244, 344) auf wenigstens einer der Reaktions- mit Destillationsstrukturen (200, 360, 370) zwischen den ersten und zweiten Katalysatorbettpaaren und des Leitens eines Teils der akkumulierten Flüssigkeitsstromanteile in den Bypass von einem der Katalysatorbetten in jedem der ersten und zweiten Katalysatorbettpaare.

11. Ein Verfahren nach Anpsruch 9, umfassend den Schritt des Leitens des im wesentlichen gesamten Flüssigkeitsstromflusses durch die ersten und zweiten Katalysatorbettpaare.

12. Ein Verfahren nach Anspruch 10, umfassend den Schritt des Leitens eines zweiten Anteils des akkumulierten Flüssigkeitsstroms von den Böden in den Bypass (244, 344) ohne Passieren eines der ersten und zweiten Katalysatorbettpaare.

13. Ein Verfahren nach Anspruch 12, umfassend den Schritt des Akkumulierens wenigstens eines Teils des ersten und des zweiten Flüssigkeitsstromanteils auf einer darunterliegenden Reaktions- mit Destillationsstruktur nach Durchtritt des ersten Anteils durch die ersten und zweiten Katalysatorbettpaare und des zweiten Anteils durch den Bypass (244, 344).

14. Ein Verfahren zum Betreiben einer Säule (210, 310), umfassend eine Mehrzahl Reaktions- mit Destillationsstrukturen (200, 360, 370), wobei jede der Reaktions- mit Destillationsstrukturen einen Boden (230, 330), ein Katalysatorbett (232, 248; 332, 348), das sich nach unten unter den Boden hinaus erstreckt, und eine Zone(250, 350) innerhalb des Katalysatorbettes umfaßt, die oben für den Durchtritt von Flüssigkeit offen ist, wobei wenigstens eine der Reaktions- mit Destillationsstrukturen zusätzlich einen Bypass umfaßt, der es einem Flüssigkeitsstrom ermöglicht, sich von dem Boden herabzubewegen, ohne durch das Katalysatorbett hindurchzutreten; wobei das Verfahren die Schritte des Zuführens eines Flüssigkeitsstroms zu einer der Reaktions- mit Destillationsstrukturen und des Herbeiführens eines Akkumulierens des Flüssigkeitsstroms auf dem Boden der Reaktions- mit Destillationsstruktur; des Leitens wenigstens eines ersten Anteils des akkumulierten Flüssigkeitsstroms in die Zone (250, 350) in dem Katalysatorbett, ohne durch das Katalysatorbett hindurchzutreten; des Passierens wenigstens eines Teils des ersten Anteils des Flüssigkeitsstroms von der Zone (250, 350) durch das Katalysatorbett zur katalytischen Reaktion, um ein Reaktionsprodukt zu bilden; des Leitens eines zweiten Anteils des akkumulierten Flüssigkeitsstroms in den Bypass ohne Hindurchtreten durch das Katalysatorbett; des Passierens des zweiten Anteils des akkumulierten Flüssigkeitsstroms nach unten durch den Bypass; und des Leitens eines Dampfstroms nach oben durch den Boden zum Kontakt mit dem akkumulierten Flüssigkeitsstrom umfaßt.

15. Ein Verfahren nach Anspruch 14, umfassend den Schritt des Durchtretens eines weiteren Teils des ersten Flüssigkeitsstromanteils durch die Zone (250, 350) ohne Durchtritt durch das Katalysatorbett.

16. Ein Verfahren nach Anspruch 15, umfassend den Schritt des Akkumulierens des ersten Anteils des Flüssigkeitsstroms auf einer darunterliegenden Reaktions- mit Destillationsstruktur (200; 360, 370) nach Durchtritt durch die Zone und das Katalysatorbett.

17. Ein Verfahren nach Anspruch 16, umfassend den Schritt des Leitens eines dritten Anteils des Flüssigkeitsstroms von dem Boden in das Katalysatorbett zur katalytischen Reaktion, um das Reaktionsprodukt zu bilden.

18. Eine Struktur zur Verwendung in einer Säule (10, 110, 210, 310) zum Herbeiführen gleichzeitiger Reaktion mit Destillation von Fluidströmen in der Säule, wobei die Struktur einen Boden (30, 130, 230, 330) zum Akkumulieren von Flüssigkeit aus einem Flüssigkeitsstrom; einen Behälter (32, 132, 232, 248, 323, 348), der mit dem Boden zur Aufnahme eines Katalysatorbetts verbunden ist, durch das ein erster Anteil der akkumulierten Flüssigkeit geleitet wird; und einen Bypass (44, 144, 244, 344) umfaßt, der mit dem Boden verbunden ist, um einem zweiten Anteil der akkumulierten Flüssigkeit zu ermöglichen, von dem Boden geleitet zu werden, ohne das Katalysatorbett und Mittel (46, 146, 246, 346) zum Leiten eines Dampfstroms durch die akkumulierte Flüssigkeit zur Wechselwirkung damit zu passieren.

19. Eine Struktur nach Anspruch 18, wobei die Mittel zum Leiten eines Dampfstroms durch die akkumulierte Flüssigkeit eine Mehrzahl Öffnungen (46, 146, 246, 346) in dem Boden (30, 130, 230, 330) umfaßt, um den Dampfstrom beim Aufwärtsströmen durch den Boden hindurchtreten und die akkumulierte Flüssigkeit berühren zu lassen.

20. Eine Struktur nach Anspruch 18, umfassend ein Wehr bzw. einen Zulaufschacht (42, 142, 242, 342) auf dem Boden zum Auslösen des Akkumulierens der Flüssigkeit.

21. Eine Struktur nach Anspruch 20, bei der das Wehr eine sich über dem Boden erstreckende feste Platte umfaßt.

22. Eine Struktur nach Anspruch 21, wobei das Wehr einen Teil des Behälters umfaßt.

23. Eine Struktur nach Anpsruch 18, wobei der Behälter zur Aufnahme des Katalysatorbettes eine perforierte Seitenwand umfaßt, um Flüssigkeit durch die Seitenwand hindurchtreten zu lassen.

24. Eine Struktur nach Anspruch 18, wobei der Behälter zur Aufnahme des Katalysatorbettes eine nicht-perforierte Seitenwand, um den Durchtritt von Flüssigkeit durch die Seitenwand zu verhindern, und einen perforierten Boden umfaßt, um den Durchtritt von Flüssigkeit durch den Boden zu ermöglichen.

25. Eine Struktur nach Anspruch 18, wobei der Behälter zur Aufnahme des Katalysatorbettes eine perforierte Abdeckung umfaßt, um einen Durchtritt der akkumulierten Flüssigkeit in den Behälter zu ermöglichen.

26. Eine Struktur nach Anspruch 18, wobei der Behälter zur Aufnahme des Katalysatorbettes eine nicht-perforierte Abdeckung, um den Durchtritt von Flüssigkeit durch die Abdeckung zu verhindern, und eine perforierte Seitenwand umfaßt, um den Durchtritt von Flüssigkeit von dem Boden und durch die Seitenwand zu ermöglichen.

27. Eine Struktur nach Anspruch 18, umfassend einen zweiten Behälter (248, 348) zur Aufnahme eines Katalysatorbettes und beabstandet von dem erst-erwähnten Behälter (232, 332).

28. Eine Struktur nach Anspruch 27, wobei ein Teil des Behälters zwischen dem erst-erwähnten und dem zweiten Behälter die Öffnungen umfaßt, um den Dampfstromfluß durch den Boden zu ermöglichen.

29. Eine Strukur nach Anspruch 27, wobei der erst-erwähnte und der zweite Behälter perforierte Wände benachbart zu einer Zone (250, 350) zwischen dem erst-erwähnten und dem zweiten Behälter aufweisen, wobei die Zone ein offenes oberes Ende aufweist, um den Fluß der akkumulierten Flüssigkeit in die Zone zu ermöglichen.

30. Eine Struktur nach Anspruch 29, wobei die Zone ein unteres Ende (252, 352) aufweist, das gegen den Durchtritt von Flüssigkeit geschlossen ist, wodurch die Flüssigkeit, die die Zone (250, 360) verläßt, durch die perforierten Seitenwände jedes der ersten und zweiten Behälter hindurchtreten muß.

31. Eine Struktur nach Anspruch 30, wobei eine Seitenwand des zweiten Behälters (248, 348) wenigstens eine Wand des Bypasses (44, 144, 244, 344) bildet.

32. Eine Struktur nach Anspruch 31, umfassend beabstandete dritte und vierte Behälter, die von dem Boden (330) herabhängen und von dem erst-erwähnten und dem zweiten Behälter beabstandet sind, wobei eine zweite Zone (350) zwischen dem dritten und vierten Behälter ein oberes Ende aufweist, das offen ist, um den Fluß wenigstens eines Anteils der akkumulierten Flüssigkeit in die zweite Zone (350) zuzulassen.

33. Eine Struktur nach Anspruch 32, wobei die zweite Zone (350) zwischen dem dritten und vierten Behälter ein unteres Ende (352) aufweist, das gegen den Durchtritt von Flüssigkeit geschlossen ist, wodurch Flüssigkeit, die die zweite Zone (350) verläßt, durch jeden der dritten und vierten Behälter hindurchtreten muß.

34. Eine Struktur nach Anspruch 33, wobei eine Seitenwand des dritten Behälters eine andere Wand des Bypasses (344) bildet, wodurch Flüssigkeit, die den dritten Behälter verläßt, in den Bypass (344) fließen kann.

35. Eine Struktur nach einem der Ansprüche 18 - 22, wobei ein Paar beabstandeter Behälter (232, 248; 332, 348) mit dem Boden zur Aufnahme von Katalysatorbetten verbunden ist und sich unter diese erstreckt und eine Zone (250; 350) zwischen den Behältern vorgesehen ist, die für den Fluß eines dritten Anteils der akkumulierten Flüssigkeit (244; 334) oben offen ist.

36. Eine Struktur nach Anspruch 35, wobei die Behälter zur Aufnahme der Katalysatorbetten perforierte Seitenwände umfassen, um den Durchtritt von Flüssigkeit durch die Seitenwände zu ermöglichen.

37. Eine Struktur nach Anspruch 36, wobei die Behälter zur Aufnahme der Katalysatorbetten perforierte Abdeckungen (340) aufweisen, um einen Durchtritt der akkumulierten Flüssigkeit in die Behälter zu ermöglichen.

38. Eine Struktur nach Anspruch 35, wobei die Behälter benachbart zu der Zone (350) perforierte Wände aufweisen.

39. Eine Struktur nach Anspruch 38, wobei die Zone (350) ein unteres Ende (352) aufweist, das gegen den Durchtritt von Flüssigkeit geschlossen ist, wodurch Flüssigkeit, die die Zone verläßt, durch die perforierten Wände jedes der Behälter hindurchtreten muß.

40. Eine Struktur nach Anspruch 39, wobei eine der Wände des Behälters wenigstens eine Wand des Bypasses (344) bildet.

41. Eine Struktur nach Anspruch 40, umfassend ein weiteres Paar beabstandeter Behälter, herabhängend von dem Boden (330) und beabstandet von dem ersten Behälterpaar, wobei eine zweite Zone (350) zwischen den Behältern ein oberes Ende aufweist, das offen ist, um den Fluß wenigstens eines Anteils der akkumulierten Flüssigkeit von dem Boden in die zweite Zone (350) zu ermöglichen.

42. Eine Struktur nach Anspruch 41, wobei die zweite Zone (350) eine unteres Ende (352) aufweist, das gegen den Durchtritt von Flüssigkeit geschlossen ist, wodurch Flüssigkeit, die die zweite Zone verläßt, durch einen Behälter des anderen Behälterpaares hindurchtreten muß.

43. Eine Struktur nach Anspruch 42, wobei eine Seitenwand eines Behälters des zweiten Behälterpaares eine weitere Wand des Bypasses (344) bildet, wodurch Flüssigkeit, die den dritten Behälter verläßt, in den Bypass (344) fließen kann.

44. Eine Struktur zur Verwendung in einer Säule (210, 310) zum Herbeiführen gleichzeitiger Reaktion mit Destillation von in der Säule fließenden Flüssigkeitsströmen, wobei die Struktur einen Boden (230; 330) zum Akkumulieren von Flüssigkeit von einem Flüssigkeitsstrom; ein Paar beabstandeter Behälter (232, 248, 332, 348), das mit einem Boden zur Aufnahme von Katalysatorbetten, durch die ein erster Anteil der akkumulierten Flüssigkeit geleitet wird, verbunden ist und sich darunter erstreckt; sowie eine Zone (250; 350) zwischen den Behältern, die oben für den Fluß eines zweiten Anteils der akkumulierten Flüssigkeit von dem Boden in die Zone (250; 350) offen ist, wobei die Behälter Seitenwände in Verbindung mit der Zone aufweisen, um den Durchtritt eines Teils des zweiten Flüssigkeitsanteils von der Zone in den Behälter zu gestatten; und Mittel (246; 346) zum Leiten eines Dampfstroms durch die akkumulierte Flüssigkeit zur Wechselwirkung damit umfaßt.

45. Eine Struktur nach Anspruch 44, wobei das Mittel zum Leiten eines Dampfstroms durch die akkumulierte Flüssigkeit eine Mehrzahl Öffnungen (246; 346) in dem Boden umfaßt, um dem Dampfstrom beim Aufwärtsfließen zu ermöglichen, durch den Boden (230; 330) hindurchzutreten und die akkumulierte Flüssigkeit zu berühren.

46. Eine Struktur nach Anspruch 44, wobei die Zone (230, 350) ein unteres Ende (252; 352) aufweist, das gegen den Durchtritt von Flüssigkeit geschlossen ist, wodurch Flüssigkeit, die die Zone (250; 350) verläßt, durch die perforierten Wände jeweils der Behälter (232, 248; 332, 348) hindurchtreten muß.

47. Eine Struktur nach Anspruch 44, umfassend ein weiteres Paar beabstandeter Behälter, herabhängend von dem Boden (330) und beabstandet von dem ersten Behälterpaar, wobei eine zweite Zone (350) zwischen den Behältern ein oberes Ende aufweist, das offen ist, um den Fluß wenigstens eines Anteils der akkumulierten Flüssigkeit von dem Boden (330) in die zweite Zone zu gestatten.

48. Eine Struktur nach Anspruch 47, wobei die erste und die zweite Zone untere Enden (352) aufweisen, die gegen den Durchtritt von Flüssigkeit geschlossen sind, wodurch Flüssigkeit, die die erste und zweite Zone verläßt, durch einen Behälter in den Behälterpaaren hindurchtreten muß.

49. Eine Struktur nach Anspruch 47, umfassend einen Bypass (344), der mit dem Boden (330) verbunden und zwischen den Behälterpaaren zur Aufnahme eines Anteils der Flüssigkeit von benachbarten Behältern angeordnet ist.

50. Eine Struktur nach Anspruch 47, umfassend einen Bypass (344), der mit dem Boden (330) verbunden ist, um einem Anteil der akkumulierten Flüssigkeit zu ermöglichen, von dem Boden (330) geleitet zu werden, ohne durch die Katalysatorbetten hindurchzutreten.

51. Eine Struktur nach Anspruch 49, wobei eine Wand von einem der Behälter wenigstens eine Wand des Bypasses (344) bildet.

52. Eine Struktur nach Anspruch 51, wobei eine Wand eines weiteren der Behälter eine andere Wand des Bypasses (344) bildet.

53. Eine Struktur nach Anspruch 52, umfassend ein Wehr bzw. einen Zulaufschacht (342) auf dem Boden, um die Akkumulation der Flüssigkeit herbeizuführen.

54. Eine Struktur nach Anspruch 53, wobei das Wehr (342) eine feste, sich über den Boden erstreckende Platte umfaßt.

55. Eine Struktur nach Anspruch 53, wobei das Wehr einen Teil eines der Behälterpaare umfaßt.

56. Eine Struktur nach Anspruch 53, wobei die Behälter perforierte Abdeckungen umfassen, um einen Durchtritt der akkumulierten Flüssigkeit in die Behälter zuzulassen.

57. Eine Struktur (290) zur Verwendung in einer Säule (210) zur Herbeiführung gleichzeitiger Reaktion mit Destillation von in der Säule fließenden Flüssigkeitsströmen, wobei die Struktur einen Boden (230) zum Akkumulieren von Flüssigkeit aus einem Flüssigkeitsstrom, einen Behälter (232), der mit dem Boden zur Aufnahme eines Katalysatorbettes, durch das ein erster Anteil der akkumulierten Flüssigkeit geleitet wird, verbunden ist und sich darunter erstreckt; eine Zone (250) in dem Behälter, die oben für den Fluß eines zweiten Anteils der akkumulierten Flüssigkeit von dem Boden (230) in die Zone (250; 350) ohne Durchtritt durch das Katalysatorbett offen ist, wobei der Behälter eine perforierte Seitenwand in Verbindung mit der Zone (250) aufweist, um den Durchtritt eines Teils des zweiten Flüssigkeitsanteils von der Zone in den Behälter zu gestatten; und Mittel (246) zum Leiten eines Dampfstroms durch die akkumulierte Flüssigkeit zur Wechselwirkung damit umfaßt.

58. Eine Struktur nach Anspruch 57, wobei das Mittel zum Leiten eines Dampfstroms durch die akkumulierte Flüssigkeit eine Mehrzahl Öffnungen (246) in dem Boden umfaßt, um dem Dampfstrom beim Aufwärtsströmen zu ermöglichen, durch den Boden (230) hindurchzutreten und mit der akkumulierten Flüssigkeit in Kontakt zu treten.

59. Eine Struktur nach Anspruch 57, wobei die Zone (250) ein unteres Ende (252) aufweist, das gegen den Durchtritt von Flüssigkeit geschlossen ist, wodurch Flüssigkeit, die die Zone (250) verläßt, durch die perforierte Seitenwand des Behälters hindurchtreten muß.

60. Eine Struktur nach Anspruch 57, wobei die Zone (250) ein unteres Ende aufweist, das wenigstens teilweise für den Durchtritt von Flüssigkeit offen ist, um wenigstens einem Teil der Flüssigkeit zu gestatten, die Zone zu verlassen, ohne durch die perforierte Seitenwand des Behälters hindurchzutreten.

61. Eine Struktur nach Anspruch 57, umfassend ein Wehr bzw. einen Zulaufschacht (242) auf dem Boden, um das Akkumulieren der Flüssigkeit zu bewirken.

62. Eine Struktur nach Anspruch 61, wobei das Wehr (242) eine feste, sich oberhalb des Bodens (230) erstreckende Platte umfaßt.

63. Eine Struktur nach Anspruch 61, wobei das Wehr einen Teil des Behälters (232) umfaßt.

64. Eine Struktur nach Anspruch 57, wobei der Behälter (232) im wesentlichen zylindrisch im Aufbau ist und eine perforierte Abdeckung (240) aufweist, um den Durchtritt der akkumulierten Flüssigkeit in den Behälter (232) zuzulassen.

65. Eine Struktur nach einem der Ansprüche 57 bis 63, wobei der Behälter (232) eine perforierte Seitenwand umfaßt, die nach außen von der perforierten Seitenwand der Zone beabstandet ist, und wobei ein Katalysatorbett in einem ringförmigen Bereich zwischen der perforierten Seitenwand der Zone und der perforierten Seitenwand des Behälters eingeschlossen ist.

66. Eine Struktur zur Verwendung in einer Säule (210;310) zum Ermöglichen gleichzeitiger Reaktion mit Destillation von in der Säule fließenden Flüssigkeitsströmen, wobei die Struktur einen Boden (230; 330) zur Aufnahme von Flüssigkeit von einem Flüssigkeitsstrom; ein Katalysatorbett (232, 248, 290; 332, 348), das mit dem Boden verbunden ist und sich darunter erstreckt; eine im wesentlichen offene Zone (250;350) in dem Katalysatorbett, wobei die Zone (250; 350) oben für den Fluß wenigstens eines Anteils der Flüssigkeit, die auf dem Boden in die Zone ohne Durchtreten durch das Katalysatorbett aufgenommen wird, offen ist, wobei das Katalysatorbett im wesentlichen durchlässig für den Durchtritt von Flüssigkeit von der Zone in das Katalysatorbett ist; und Mittel (246; 346) zum Leiten eines Dampfstroms durch die akkumulierte Flüssigkeit zur Wechselwirkung damit umfaßt.

67. Eine Struktur nach Anspruch 66, umfassend eine Mehrzahl Öffnungen (246; 346) in dem Boden, um den Dampfstrom beim Aufwärtsströmen durch den Boden hindurchtreten und mit der auf dem Boden aufgenommenen Flüssigkeit in Kontakt treten zu lassen.

68. Eine Struktur nach Anspruch 67, wobei die Zone (250; 350) ein unteres Ende (252; 352) aufweist, das gegen den Durchtritt von Flüssigkeit geschlossen ist, wodurch Flüssigkeit, die die Zone (250; 350) verläßt, durch das Katalysatorbett hindurchtreten muß.

69. Eine Struktur nach Anspruch 66, wobei die Zone (250; 350) ein unteres Ende aufweist, das wenigstens teilweise für den Durchtritt von Flüssigkeit offen ist, um wenigstens einem Teil der Flüssigkeit zu gestatten, die Zone zu verlassen, ohne durch das Katalysatorbett hindurchzutreten.

70. Eine Struktur nach Anspruch 66, umfassend ein Wehr bzw. einen Zulaufschacht (242; 342) auf dem Boden (230; 330), um das Akkumulieren der Flüssigkeit auf dem Boden (230; 330) zu bewirken.

71. Eine Struktur nach Anspruch 70, wobei das Wehr eine feste, sich oberhalb des Bodens erstreckende Platte umfaßt.

72. Eine Struktur nach Anspruch 70, wobei das Wehr einen Teil des Katalysatorbettes umfaßt.

73. Eine Struktur nach Anspruch 66, wobei das Katalysatorbett (290) eine äußere Oberfläche aufweist, die im wesentlichen von zylindrischem Aufbau ist.

74. Eine Säule (10, 110, 210, 310) zum Ermöglichen gleichzeitiger Reaktion mit Destillation von in der Säule fließenden Flüssigkeitsströmen, wobei die Säule eine Ummantelung (12), die eine im wesentlichen offene innere Kammer (14) bildet; sowie einen Bereich (16), der innerhalb der inneren Kammer (14) angeordnet ist und eine Mehrzahl von Reaktions- mit Destillationsstrukturen nach einem der Ansprüche 18 bis 19 umfaßt.

75. Eine Säule nach Anspruch 74, umfassend eine Zone (250) in dem Behälter (232), die oben für den Fluß eines dritten Anteils der akkumulierten Flüssigkeit von dem Boden (230) in die Zone ohne Durchtritt durch das Katalysatorbett offen ist.

76. Eine Säule nach Anspruch 75, wobei die Zone (250) ein unteres Ende (252) aufweist, das für den Durchtritt von Flüssigkeit geschlossen ist, wodurch Flüssigkeit, die die Zone (250) verläßt, durch den Behälter (232) hindurchtreten muß.

77. Eine Säule (210, 310) zum Ermöglichen gleichzeitiger Reaktion mit Destillation von in der Säule fließenden Flüssigkeitsströmen, wobei die Säule eine Ummantelung (12) umfaßt, die eine im wesentlichen offene innere Kammer (14) bildet; sowie einen Bereich (16), der innerhalb der inneren Kammer (14) angeordnet ist und eine Mehrzahl von Reaktions- mit Destillationsstrukturen umfaßt, wobei jede der Reaktions- mit Destillationsstrukturen einen Boden zum Akkumulieren von Flüssigkeit aus einem Flüssigkeitsstrom, ein Paar beabstandeter Katalysatorbetten (232, 248; 332, 348), das mit dem Boden zur Aufnahme eines ersten Anteils der akkumulierten Flüssigkeit verbunden ist und sich unterhalb desselben erstreckt, eine Zone (250; 350) zwischen den Betten, die oben für den Fluß eines zweiten Anteils der akkumulierten Flüssigkeit offen ist, und einen Bypass (244; 344) umfaßt, der mit dem Boden verbunden ist, um einen dritten Anteil der akkumulierten Flüssigkeit, von dem Boden ohne Durchtritt durch das Katalysatorbett leiten zu lassen.

78. Eine Säule nach Anspruch 77, wobei die Destillationsstrukturen in einer Mehrzahl vertikal beabstandeter Ebenen in dem Bereich (16) angeordnet sind, und wobei die Katalysatorbetten im wesentlichen horizontal longitudinale Achsen aufweisen, wobei die Achsen in einer Ebene sich in einem Winkel zwischen 0 und 90 Grad zu der Ausrichtung der Achsen der Katalysatorbetten in einer benachbarten Ebene erstrecken.

79. Eine Säule nach Anspruch 78, wobei der Winkel ungefähr 90 Grad beträgt.

80. Eine Säule nach Anspruch 79, umfassend eine Mehrzahl von Öffnungen (246; 346) in dem Bolden (230, 330), um einem Dampfstrom beim Aufwärtsströmen durch den Bereich den Boden durchtreten und mit der akkumulierten Flüssigkeit in Kontakt treten zu lassen.

81. Eine Säule nach Anspruch 80, umfassend ein Wehr bzw. einen Zulaufschacht (242; 342) auf dem Boden, um ein Akkumulieren der Flüssigkeit zu bewirken.

82. Eine Säule nach Anspruch 81, wobei das Wehr (242; 342) eine feste, sich über dem Boden (230; 330) erstreckende Platte umfaßt.

83. Eine Säule nach Anspruch 81, wobei das Wehr (242; 342) einen Teil des Katalysatorbettes (232, 248; 332, 348) umfaßt.

84. Eine Säule nach Anspruch 81, umfassend Behälter, die die Katalysatorbetten (232, 248; 332, 348) enthalten, und wobei die Behälter perforierte Seitenwände umfassen, um den Durchtritt von Flüssigkeit durch die Seitenwände zuzulassen.

85. Eine Säule nach Anspruch 84, wobei die Behälter perforierte Abdeckungen umfassen, um einen Durchtritt der akkumulierten Flüssigkeit in die Behälter zuzulassen.

86. Eine Säule nach Anspruch 85, wobei die Behälter perforierte Wände benachbart zu der Zone (250; 350) aufweisen.

87. Eine Säule nach Anspruch 86, wobei die Zone (250; 350) ein unteres Ende (252; 352) aufweist, das gegen den Flüssigkeitsdurchtritt geschlossen ist, wodurch Flüssigkeit, die die Zone (250; 350) verläßt, durch die perforierten Wände von einem der Behälter hindurchtreten muß.

88. Eine Säule nach Anspruch 87, wobei eine der Wände eines der Behälter wenigstens eine Wand des Bypasses (244; 344) bildet.

89. Eine Säule nach Anspruch 88, umfassend ein weiteres Paaar beabstandeter Behälter, herabhängend von dem Boden (330) und zu dem ersten Behälterpaar beabstandet, wobei eine zweite Zone (350) zwischen den Behältern ein oberes Ende aufweist, das offen ist, um den Fluß wenigstens eines Anteils des akkumulierten Flüssigkeit von dem Boden (330) in die zweite Zone (350) zuzulassen.

90. Eine Säule nach Anspruch 89, wobei die zweite Zone (350) ein unteres Ende (352) aufweist, das für den Flüssigkeitsdurchtritt geschlossen ist, wodurch Flüssigkeit, die die zweite Zone verläßt, durch einen Behälter des anderen Behälterpaars hindurchtreten muß.

91. Eine Säule nach Anspruch 90, wobei eine Seitenwand eines der Behälter des zweiten Behälterpaars eine weitere Wand des Bypasses (344) bildet, wodurch Flüssigkeit, die den dritten Behälter verläßt, in den Bypass fließen kann.

## Revendications

1. Procédé pour faire fonctionner une colonne (10, 110, 210, 310) contenant une pluralité de structures de réaction avec distillation (28, 100, 160, 170, 200, 360, 370), chacune des structures de réaction avec distillation comprenant un plateau (30, 130, 230, 330), un lit catalytique (32, 132, 232, 248, 332, 348) s'étendant vers le bas au-dessous du plateau et une dérivation (44, 144, 244, 344) qui permet à un courant de liquide de descendre du plateau sans passer à travers le lit catalytique ; le procédé comprenant les étapes consistant à alimenter à l'aide d'un courant de liquide l'une des structures de réaction avec distillation et à provoquer une accumulation du courant de liquide sur le plateau de ladite structure ; à faire passer une première partie du courant de liquide accumulé à travers le lit catalytique (32, 132, 232, 248, 332, 348) pour former par réaction catalytique un produit de réaction ; à faire passer une seconde partie du courant de liquide accumulé dans la dérivation (44, 144, 244, 344) ; à accumuler au moins une partie des première et seconde parties du courant de liquide sur une structure sous-jacente de réaction avec distillation après le passage de la première partie à travers le lit catalytique et de la seconde partie dans la dérivation ; et à faire passer un courant de vapeur vers le haut à travers le plateau (30, 130, 230, 330) pour le mettre en contact avec le courant de liquide accumulé.

2. Procédé selon la revendication 1, dans lequel l'étape consistant à faire passer une première partie du courant de liquide accumulé à travers un lit catalytique comprend l'étape consistant à faire passer la première partie du courant de liquide accumulé à travers une pluralité de lits catalytiques (32, 132, 232, 332) séparés s'étendant vers le bas à partir du plateau (30, 130, 230, 330).

3. Procédé selon l'une des revendications 1 ou 2, comprenant l'étape consistant à provoquer l'accumulation de la seconde partie du courant de liquide dans la dérivation (144, 244, 344) et à faire passer une partie de la seconde partie accumulée du courant de liquide de la dérivation dans le lit catalytique pour former par réaction catalytique le produit de réaction.

4. Procédé selon la revendication 3, comprenant l'étape consistant à faire passer une partie de la première partie du courant de liquide depuis le lit catalytique (132, 232, 332) dans la dérivation (144, 244, 344) pour la mélanger avec la seconde partie du courant de liquide avant l'étape consistant à accumuler les première et seconde parties sur le plateau sous-jacent de réaction avec distillation (130, 230, 330).

5. Procédé pour faire fonctionner une colonne (210, 310) contenant une pluralité de structures de réaction avec distillation (200, 360, 370), chacune des structures de réaction avec distillation comprenant un plateau (230, 330), deux lits catalytiques (232, 248 ; 332, 348), s'étendant vers le bas au-dessous du plateau, et une zone (250, 350) située entre les deux lits catalytiques qui est ouverte au sommet pour le passage de liquide ; le procédé comprenant les étapes consistant à alimenter à l'aide d'un courant de liquide une des structures de réaction avec distillation et à provoquer une accumulation du courant de liquide sur le plateau (230, 330) de la structure de réaction avec distillation ; à faire passer au moins une première partie du courant de liquide accumulé dans la zone (250, 350) située entre les deux lits catalytiques ; à faire passer au moins une partie de la première partie du courant de liquide depuis la zone (250, 350) à travers l'un des lits catalytiques pour former par réaction catalytique un produit de réaction ; à soutirer une autre partie de la partie du courant de liquide de cette zone sans passer à travers les lits catalytiques ; et à faire passer un courant de vapeur vers le haut à travers le plateau (230, 330) pour le mettre en contact avec le courant de liquide accumulé.

6. Procédé selon la revendication 5, comprenant les étapes consistant à prévoir une dérivation (244, 344) sur au moins l'une des structures de réaction avec distillation pour permettre à une seconde partie du courant de liquide accumulé de descendre depuis le plateau (230, 330) sans passer à travers les premier et second lits catalytiques et, ensuite, à faire passer la seconde partie du courant de liquide accumulé dans la dérivation (244, 344).

7. Procédé selon la revendication 6, comprenant l'étape consistant à accumuler au moins une partie des première et seconde parties du courant de liquide sur une structure de réaction avec distillation après le passage de la première partie à travers les deux lits catalytiques et de la seconde partie dans la dérivation (244, 344).

8. Procédé selon la revendication 7, comprenant l'étape consistant à faire passer une partie de la première partie du courant de liquide depuis l'un des deux lits catalytiques dans la dérivation pour la mélanger avec la seconde partie du courant de liquide avant l'étape consistant à accumuler les première et seconde parties sur le plateau sous-jacent de réaction avec distillation.

9. Procédé selon la revendication 5, dans lequel chacune des structures de distillation comprend un plateau inférieur supplémentaire comprenant deux lits catalytiques (232, 248 ; 332, 348) supplémentaires comportant, entre eux, une zone qui est ouverte au sommet pour le passage de liquide, les deux lits catalytiques supplémentaires étant associés au plateau inférieur et s'étendant vers le bas au-dessous de celui-ci ; le procédé comprenant les étapes consistant à alimenter en un courant de liquide une des structures de réaction avec distillation et à provoquer une accumulation du courant de liquide sur le plateau de ladite structure ; à faire passer au moins des parties du courant de liquide accumulé dans les première et seconde zones entre les première et seconde paires de lits catalytiques ; à faire passer une partie des parties du courant de liquide depuis ces zones à travers les première et seconde paires de lits catalytiques pour former par réaction catalytique un produit de réaction ; à soutirer une autre partie des parties du courant de liquide des zones sans passer à travers les première et seconde paires de lits catalytiques ; et à faire passer un courant de vapeur vers le haut à travers les plateaux pour le mettre en contact avec le courant de liquide accumulé.

10. Procédé selon la revendication 9, comprenant les étapes consistant à prévoir une dérivation (244, 344) sur au moins l'une des structures de réaction avec distillation (200, 360, 370) entre les première et seconde paires de lits catalytiques et à faire passer une partie des parties du courant de liquide accumulé dans la dérivation depuis l'un des lits catalytiques dans chacune des première et seconde paires de lits catalytiques.

11. Procédé selon la revendication 9, comprenant l'étape consistant à faire passer sensiblement tout le flux du courant de liquide à travers les première et seconde paires de lits catalytiques.

12. Procédé selon la revendication 10, comprenant l'étape consistant à faire passer une seconde partie du courant de liquide accumulé depuis les plateaux dans la dérivation (244, 344) sans passer à travers l'une ou l'autre des première et seconde paires de lits catalytiques.

13. Procédé selon la revendication 12, comprenant l'étape consistant à accumuler au moins une partie de la première partie et de la seconde partie du courant de liquide sur une structure sous-jacente de réaction avec distillation après le passage de la première partie à travers les première et seconde paires de lits catalytiques et de la seconde partie dans la dérivation (244, 344).

14. Procédé pour faire fonctionner une colonne (210, 310) contenant une pluralité de structures de réaction avec distillation (200, 360, 370), chacune des structures de réaction avec distillation comprenant un plateau (230, 330), un lit catalytique (232, 248 ; 332, 348), s'étendant vers le bas au-dessous du plateau, et une zone (250, 350) située dans le lit catalytique qui est ouverte au sommet pour le passage de liquide, au moins l'une des structures de réaction avec distillation comprenant en plus une dérivation qui permet à un courant de liquide de descendre depuis le plateau sans passer à travers le lit catalytique ; le procédé comprenant les étapes consistant à alimenter à l'aide d'un courant de liquide l'une des structures de réaction avec distillation et à provoquer une accumulation du courant de liquide sur le plateau de la structure de réaction avec distillation ; à faire passer au moins une première partie du courant de liquide accumulé dans la zone (250, 350) à l'intérieur du lit catalytique sans passer à travers le lit catalytique ; à faire passer au moins une partie de la première partie du courant de liquide, depuis la zone, à travers le lit catalytique pour former par réaction catalytique un produit de réaction ; à faire passer une seconde partie du courant de liquide accumulé dans la dérivation sans passer à travers le lit catalytique ; à faire passer la seconde partie du courant de liquide accumulé vers le bas dans la dérivation ; et à faire passer un courant de vapeur vers le haut à travers le plateau pour le mettre en contact avec le courant de liquide accumulé.

15. Procédé selon la revendication 14, comprenant l'étape consistant à faire passer une autre partie de la première partie du courant de liquide à travers la zone (250, 350) sans passer à travers le lit catalytique.

16. Procédé selon la revendication 15, comprenant l'étape consistant à accumuler la première partie du courant de liquide sur une structure sous-jacente de réaction avec distillation (200, 360, 370) après passage à travers la zone et à travers le lit catalytique.

17. Procédé selon la revendication 16, comprenant l'étape consistant à faire passer une troisième partie du courant de liquide depuis le plateau dans le lit catalytique pour former par réaction catalytique le produit de réaction.

18. Structure destinée à être utilisée dans une colonne (10, 110, 210, 310) pour effectuer une réaction avec distillation simultanée de courants de fluide dans la colonne, la structure comprenant un plateau (30, 130, 230, 330) pour accumuler le liquide provenant d'un courant de liquide ; un conteneur (32, 132, 232, 248, 323, 348) associé au plateau pour contenir un lit catalytique à travers lequel une première partie du liquide accumulé est dirigée ; et une dérivation (44, 144, 244, 344) associée au plateau pour permettre à une seconde partie du liquide accumulé d'être dirigée depuis le plateau sans passer à travers le lit catalytique et des moyens (46, 146, 246, 346) destinés à faire passer un courant de vapeur à travers le liquide accumulé pour une interaction avec celui-ci.

19. Structure selon la revendication 18, dans laquelle les moyens destinés à faire passer un courant de vapeur à travers le liquide accumulé comprennent une pluralité d'ouvertures (46, 146, 246, 346) dans le plateau (30, 130, 230, 330) pour permettre au courant de vapeur, alors qu'il circule vers le haut, de passer à travers le plateau et d'entrer en contact avec le liquide accumulé.

20. Structure selon la revendication 18, comprenant un barrage (42, 142, 242, 342) sur le plateau pour provoquer l'accumulation du liquide.

21. Structure selon la revendication 20, dans laquelle le barrage comprend une plaque pleine s'étendant au-dessus du plateau.

22. Structure selon la revendication 21, dans laquelle le barrage comprend une partie du conteneur.

23. Structure selon la revendication 18, dans laquelle le conteneur destiné à contenir le lit catalytique comprend une paroi latérale perforée permettant le passage de liquide à travers la paroi latérale.

24. Structure selon la revendication 18, dans laquelle le conteneur destiné à contenir le lit catalytique comprend une paroi latérale non-perforée pour bloquer le passage de liquide à travers la paroi latérale et un fond perforé permettant le passage de liquide à travers le fond.

25. Structure selon la revendication 18, dans laquelle le conteneur destiné à contenir le lit catalytique comprend un couvercle perforé permettant le passage du liquide accumulé dans le conteneur.

26. Structure selon la revendication 18, dans laquelle le conteneur destiné à contenir le lit catalytique comprend un couvercle non-perforé pour bloquer le passage de liquide à travers le couvercle et une paroi latérale perforée permettant le passage de liquide depuis le plateau et à travers la paroi latérale.

27. Structure selon la revendication 18, comprenant un second conteneur (248, 348) destiné à contenir un lit catalytique et qui est espacé du conteneur (232, 332) mentionné en premier.

28. Structure selon la revendication 27, dans laquelle une partie du plateau entre le conteneur mentionné en premier et le second conteneur comprend les ouvertures permettant la circulation du courant de vapeur à travers le plateau.

29. Structure selon la revendication 27, dans laquelle le conteneur mentionné en premier et le second conteneur présentent des parois perforées contiguës à une zone (250, 350) située entre le conteneur mentionné en premier et le second conteneur, la zone présentant une extrémité supérieure qui est ouverte pour permettre la circulation du courant de liquide dans la zone.

30. Structure selon la revendication 29, dans laquelle la zone présente une extrémité inférieure (252, 352) qui est fermée au passage de liquide, de telle manière que le liquide quittant la zone (250, 360) doive passer à travers les parois perforées de l'un ou l'autre des premier et second conteneurs.

31. Structure selon la revendication 30, dans laquelle une paroi latérale du second conteneur (248, 348) définit au moins une paroi de la dérivation (44, 144, 244, 344).

32. Structure selon la revendication 31, comprenant des troisième et quatrième conteneurs séparés qui pendent à partir du plateau (330) et sont espacés du conteneur mentionné en premier et du second conteneur, dans laquelle une seconde zone (350) entre les troisième et quatrième conteneurs présente une extrémité supérieure qui est ouverte pour permettre la circulation d'au moins une partie du liquide accumulé dans la seconde zone (350).

33. Structure selon la revendication 32, dans laquelle la seconde zone (350) entre les troisième et quatrième conteneurs présente une extrémité inférieure (352) qui est fermée au passage de liquide, de telle manière que le liquide quittant la seconde zone (350) doive passer à travers l'un ou l'autre des troisième et quatrième conteneurs.

34. Structure selon la revendication 33, dans laquelle une paroi latérale du troisième conteneur définit une autre paroi de la dérivation (344), de telle manière que le liquide quittant le troisième conteneur puisse circuler dans la dérivation (344).

35. Structure selon l'une des revendications 18 à 22, dans laquelle deux conteneurs séparés (232, 248 ; 332, 348) sont associés au plateau et s'étendent au-dessous de celui-ci pour contenir des lits catalytiques et dans laquelle il y a, entre les conteneurs, une zone (250 ; 350) qui est ouverte au sommet pour la circulation d'une troisième partie du liquide accumulé (244 ; 334).

36. Structure selon la revendication 35, dans laquelle les conteneurs destinés à contenir les lits catalytiques comprennent des parois latérales perforées permettant le passage de liquide à travers les parois latérales.

37. Structure selon la revendication 36, dans laquelle les conteneurs destinés à contenir les lits catalytiques comprennent des couvercles perforés (340) permettant le passage du liquide accumulé dans les conteneurs.

38. Structure selon la revendication 35, dans laquelle les conteneurs présentent des parois perforées contiguës à la zone (350).

39. Structure selon la revendication 38, dans laquelle la zone (350) présente une extrémité inférieure (352) qui est fermée au passage de liquide, de telle manière que le liquide quittant la zone doive passer à travers les parois perforées de l'un ou l'autre des conteneurs.

40. Structure selon la revendication 39, dans laquelle l'une des parois de l'un des conteneurs définit au moins une paroi de la dérivation (344).

41. Structure selon la revendication 40, comprenant deux autres conteneurs séparés qui pendent à partir du plateau (330) et sont espacés des deux premiers conteneurs, dans laquelle une seconde zone (350) entre les conteneurs présente une extrémité supérieure qui est ouverte pour permettre la circulation d'au moins une partie du liquide accumulé depuis le plateau dans la seconde zone (350).

42. Structure selon la revendication 41, dans laquelle la seconde zone (350) présente une extrémité inférieure (352) qui est fermée au passage de liquide, de telle manière que le liquide quittant la seconde zone doive passer à travers l'un ou l'autre conteneur de l'autre paire de conteneurs.

43. Structure selon la revendication 42, dans laquelle une paroi latérale de l'un des conteneurs dans la seconde paire de conteneurs définit une autre paroi de la dérivation (344), de telle manière que le liquide quittant le troisième conteneur puisse s'écouler dans la dérivation (344).

44. Structure susceptible d'être utilisée dans une colonne (210, 310) pour effectuer une réaction avec distillation simultanée de courants de fluide circulant dans la colonne, la structure comprenant un plateau (230 ; 330) pour accumuler du liquide provenant d'un courant de liquide ; deux conteneurs séparés (232, 248, 332, 348) associés au plateau et s'étendant au-dessous de celui-ci pour contenir des lits catalytiques à travers lesquels une première partie du liquide accumulé est dirigée ; et une zone (250 ; 350) entre les conteneurs qui est ouverte au sommet pour la circulation d'une seconde partie du liquide accumulé depuis le plateau dans la zone (250 ; 350), les conteneurs présentant des parois latérales en communication avec la zone pour permettre le passage d'une partie de la seconde partie du liquide depuis la zone dans les conteneurs ; et des moyens (246 ; 346) destinés à faire passer un courant de vapeur à travers le liquide accumulé pour une interaction avec celui-ci.

45. Structure selon la revendication 44, dans laquelle les moyens destinés à faire passer un courant de vapeur à travers le liquide accumulé comprennent une pluralité d'ouvertures (246 ; 346) dans le plateau permettant au courant de vapeur, alors qu'il circule vers le haut, de passer à travers le plateau (230 ; 330) et d'entrer en contact avec le liquide accumulé.

46. Structure selon la revendication 44, dans laquelle la zone (230, 350) présente une extrémité inférieure (252; 352) qui est fermée au passage de liquide, de telle manière que le liquide quittant la zone (250 ; 350) doive passer à travers les parois perforées de l'un ou l'autre des conteneurs (232, 248 ; 332, 348).

47. Structure selon la revendication 44, comprenant deux autres conteneurs séparés qui pendent à partir du plateau (330) et sont espacés des deux premiers conteneurs, dans laquelle une seconde zone (350) entre les conteneurs présente une extrémité supérieure qui est ouverte pour permettre la circulation d'au moins une partie du liquide accumulé depuis le plateau (330) jusque dans la seconde zone.

48. Structure selon la revendication 47, dans laquelle les première et seconde zones présentent des extrémités inférieures (352) qui sont fermées au passage de liquide, de telle manière que le liquide quittant les première et seconde zones doive passer à travers un conteneur dans les paires de conteneurs.

49. Structure selon la revendication 47, comprenant une dérivation (344) associée au plateau (330) et disposée entre les paires de conteneurs de façon à recevoir une partie du liquide provenant des conteneurs contigus.

50. Structure selon la revendication 47, comprenant une dérivation (344) associée au plateau (330) pour permettre à une partie du liquide accumulé d'être dirigée depuis le plateau (330) sans passer à travers les lits catalytiques.

51. Structure selon la revendication 49, dans laquelle une paroi de l'un des conteneurs définit au moins une paroi de la dérivation (344).

52. Structure selon la revendication 51, dans laquelle une paroi d'un autre des conteneurs définit une autre paroi de la dérivation (344).

53. Structure selon la revendication 52, comprenant un barrage (342) sur le plateau pour provoquer l'accumulation du liquide.

54. Structure selon la revendication 53, dans laquelle le barrage (342) comprend une plaque pleine s'étendant au-dessus du plateau.

55. Structure selon la revendication 53, dans laquelle le barrage comprend une partie de l'un des conteneurs de la paire de conteneurs.

56. Structure selon la revendication 53, dans laquelle les conteneurs comprennent des couvercles perforés permettant le passage du liquide accumulé dans les conteneurs.

57. Structure (290) susceptible d'être utilisée dans une colonne (210) pour effectuer une réaction avec distillation sumultanée de courants de fluide circulant dans la colonne, la structure comprenant un plateau (230) pour accumuler du liquide provenant d'un courant de liquide ; un conteneur (232) associé au plateau (230) et s'étendant au-dessous de celui-ci pour contenir un lit catalytique à travers lequel une première partie du liquide accumulé est dirigée ; une zone (250) dans le conteneur qui est ouverte au sommet pour la circulation d'une seconde partie du liquide accumulé depuis le plateau (230) dans la zone sans passer à travers le lit catalytique, le conteneur (232) présentant une paroi latérale perforée en communication avec la zone (250) pour permettre le passage d'une partie de la seconde partie du liquide depuis la zone dans le conteneur et des moyens (246) destinés à faire passer un courant de vapeur à travers le liquide accumulé pour une interaction avec celui-ci.

58. Structure selon la revendication 57, dans laquelle les moyens destinés à faire passer un courant de vapeur à travers le liquide accumulé comprennent une pluralité d'ouvertures (246) dans le plateau pour permettre au courant de vapeur, alors qu'il circule vers le haut, de passer à travers le plateau (230) et d'entrer en contact avec le liquide accumulé.

59. Structure selon la revendication 57, dans laquelle la zone (250) présente une extrémité inférieure (252) qui est fermée au passage de liquide, de telle manière que le liquide quittant la zone (250) doive passer à travers la paroi latérale perforée du conteneur.

60. Structure selon la revendication 57, dans laquelle la zone (250) présente une extrémité inférieure qui est au moins partiellement ouverte au passage de liquide pour permettre à au moins une partie du liquide de quitter la zone sans passer à travers la paroi latérale perforée du conteneur.

61. Structure selon la revendication 57, comprenant un barrage (242) sur le plateau pour provoquer l'accumulation du liquide.

62. Structure selon la revendication 61, dans laquelle le barrage (242) comprend une plaque pleine s'étendant au-dessus du plateau (230).

63. Structure selon la revendication 61, dans laquelle le barrage comprend une partie du conteneur (232).

64. Structure selon la revendication 57, dans laquelle le conteneur (232) est généralement de configuration cylindrique et comporte un couvercle perforé (240) permettant le passage du liquide accumulé dans le conteneur (232).

65. Structure selon l'une des revendications 57 à 63, dans laquelle le conteneur (232) comprend une paroi latérale perforée espacée vers l'extérieur de la paroi latérale perforée de la zone et dans laquelle est compris un lit catalytique dans une région annulaire entre la paroi latérale perforée de la zone et la paroi latérale perforée du conteneur.

66. Structure susceptible d'être utilisée dans une colonne (210 ; 310) pour effectuer une réaction avec distillation simultanée de courants de fluide circulant dans la colonne, la structure comprenant un plateau (230 ; 330) pour recevoir du liquide provenant d'un courant de liquide ; un lit catalytique (232, 248, 290 ; 332, 348) associé au plateau et s'étendant au-dessous de celui-ci ; une zone généralement ouverte (250 ; 350) située dans le lit catalytique, la zone (250 ; 350) étant ouverte au sommet pour la circulation d'au moins une partie du liquide reçu sur le plateau dans la zone sans passer à travers le lit catalytique, le lit catalytique étant généralement perméable au passage de liquide depuis la zone dans le lit catalytique et des moyens (246 ; 346) destinés à faire passer un courant de vapeur à travers le liquide reçu sur le plateau pour une interaction avec celui-ci.

67. Structure selon la revendication 66, comprenant une pluralité d'ouvertures (246 ; 346) dans le plateau pour permettre au courant de vapeur, alors qu'il circule vers le haut, de passer à travers le plateau et d'entrer en contact avec le liquide reçu sur le plateau.

68. Structure selon la revendication 67, dans laquelle la zone (250 ; 350) présente une extrémité inférieure (252 ; 352) qui est fermée au passage de liquide, de telle manière que le liquide quittant la zone (250 ; 350) doive passer à travers le lit catalytique.

69. Structure selon la revendication 66, dans laquelle la zone (250 ; 350) présente une extrémité inférieure qui est au moins partiellement ouverte au passage de liquide pour permettre à au moins une partie du liquide de quitter la zone sans passer à travers le lit catalytique.

70. Structure selon la revendication 66, comprenant un barrage (242 ; 342) sur le plateau (230 ; 330) pour provoquer l'accumulation du liquide sur le plateau (230 ; 330).

71. Structure selon la revendication 70, dans laquelle le barrage comprend une plaque pleine s'étendant au-dessus du plateau.

72. Structure selon la revendication 70, dans laquelle le barrage comprend une partie du lit catalytique.

73. Structure selon la revendication 66, dans laquelle le lit catalytique (290) présente une surface extérieure qui est généralement de configuration cylindrique.

74. Colonne (10, 110, 210, 310) pour effectuer une réaction avec distillation simultanée de courants de fluide circulant dans la colonne, la colonne comprenant un corps cylindrique (12) définissant une chambre interne (14) généralement ouverte ; une région (16) disposée dans la chambre interne (14) et contenant une pluralité de structures de réaction avec distillation selon l'une des revendications 18 et 19.

75. Colonne selon la revendication 74, comprenant une zone (250) dans le conteneur (232) qui est ouverte au sommet pour la circulation d'une troisième partie du liquide accumulé depuis le plateau dans la zone sans passer à travers le lit catalytique.

76. Colonne selon la revendication 75, dans laquelle la zone (250) présente une extrémité inférieure (252) qui est fermée au passage de liquide, de telle manière que le liquide quittant la zone (250) doive passer à travers le conteneur (232).

77. Colonne (210, 310) pour effectuer une réaction avec distillation simultanée de courants de fluide circulant dans la colonne, la colonne comprenant un corps cylindrique (12) définissant une chambre interne (14) généralement ouverte ; une région (16) disposée dans la chambre interne (14) et comprenant une pluralité de structures de réaction avec distillation, chacune des structures de réaction avec distillation comprenant un plateau pour accumuler du liquide provenant d'un courant de liquide, deux lits catalytiques séparés (232, 248 ; 332, 348) associés au plateau et s'étendant au-dessous de celui-ci pour recevoir une première partie du liquide accumulé, une zone (250 ; 350) située entre les lits qui est ouverte au sommet pour la circulation d'une seconde partie du liquide accumulé, et une dérivation (244 ; 344) associée au plateau pour permettre à une troisième partie du liquide accumulé d'être dirigée depuis le plateau sans passer à travers les lits catalytiques.

78. Colonne selon la revendication 77, dans laquelle les structures de distillation sont disposées en une pluralité de niveaux séparés verticalement dans la région (16) et dans laquelle les lits catalytiques présentent des axes longitudinaux généralement horizontaux, avec les axes dans un niveau s'étendant selon un angle compris entre 0 et 90 degrés par rapport à l'orientation des axes des lits catalytiques dans un niveau contigu.

79. Colonne selon la revendication 78, dans laquelle l'angle est d'environ 90 degrés.

80. Colonne selon la revendication 79, comprenant une pluralité d'ouvertures (246 ; 346) dans le plateau (230, 330) pour permettre à un courant de vapeur, alors qu'il circule vers le haut à travers la région, de passer à travers le plateau, et d'entrer en contact avec le liquide accumulé.

81. Colonne selon la revendication 80, comprenant un barrage (242 ; 342) sur le plateau pour provoquer l'accumulation du liquide.

82. Colonne selon la revendication 81, dans laquelle le barrage (242 ; 342) comprend une plaque pleine s'étendant au-dessus du plateau (230 ; 330).

83. Colonne selon la revendication 81, dans laquelle le barrage (242 ; 342) comprend une partie du lit catalytique (232, 248 ; 332, 348).

84. Colonne selon la revendication 81, comprenant des conteneurs contenant les lits catalytiques (232, 248 ; 332, 348) et dans laquelle les conteneurs comprennent des parois latérales perforées permettant le passage de liquide à travers les parois latérales.

85. Colonne selon la revendication 84, dans laquelle les conteneurs comprennent des couvercles perforés permettant le passage du liquide accumulé dans les conteneurs.

86. Colonne selon la revendication 85, dans laquelle les conteneurs présentent des parois perforées contiguës à la zone (250 ; 350).

87. Colonne selon la revendication 86, dans laquelle la zone (250 ; 350) présente une extrémité inférieure (252 ; 352) qui est fermée au passage de liquide, de telle manière que le liquide quittant la zone (250 ; 350) doive passer à travers les parois perforées de l'un ou l'autre des conteneurs.

88. Colonne selon la revendication 87, dans laquelle l'une des parois de l'un des conteneurs définit au moins une paroi de la dérivation (244 ; 344).

89. Colonne selon la revendication 88, comprenant deux autres conteneurs séparés qui pendent à partir du plateau (330) et sont espacés des deux premiers conteneurs, dans laquelle une seconde zone (350) située entre les conteneurs présente une extrémité supérieure qui est ouverte pour permettre la circulation d'au moins une partie du liquide accumulé depuis le plateau (330) dans la seconde zone (350).

90. Colonne selon la revendication 89, dans laquelle la seconde zone (350) présente une extrémité inférieure (352) qui est fermée au passage de liquide, de telle manière que le liquide quittant la seconde zone doive passer à travers l'un ou l'autre des conteneurs de l'autre paire de conteneurs.

91. Colonne selon la revendication 90, dans laquelle une paroi latérale de l'un des conteneurs dans la seconde paire de conteneurs définit une autre paroi de la dérivation (344), de telle manière que le liquide quittant le troisième conteneur puisse circuler dans la dérivation.
